# EUROPEAN PATENT APPLICATION

(11) **EP 4 366 161 A1**
(43) Date of publication of application: **08.05.2024**
(21) Application number: 22832817.5
(22) Date of filing: 15.06.2022
(51) Int. Cl.: H02S 40/34, E06B 5/00, E06B 9/24, H02S 30/20, H02S 40/36

(54) **SLAT MEMBER PROVIDED WITH SOLAR CELL AND SOLAR CELL BLIND**

(30) Priority: 28.06.2021 JP 2021106679
(71) Applicant: Kyocera Corporation, Kyoto-shi, Kyoto 612-8501 (JP)
(72) Inventor: USHIO, Shinnosuke, Kyoto-shi, Kyoto 612-8501 (JP); NISHIMURA, Daisuke, Kyoto-shi, Kyoto 612-8501 (JP); MIYAMICHI, Yusuke, Kyoto-shi, Kyoto 612-8501 (JP); SHIBAHARA, Motoki, Kyoto-shi, Kyoto 612-8501 (JP)
(74) Representative: TBK
(86) International application number: PCT/JP2022/023895
(87) International publication number: WO 2023/276662

(57) **Abstract**

A slat (3s) for a solar cell includes a plate-like slat body (31), a plate-like solar cell unit (32) fixed to the slat body (31), and a connection box (33). The slat body (31) includes a first surface (31f), a second surface (31s) opposite to the first surface (31f), and a first side surface (31t), and has a longitudinal direction being a first direction along the first surface (31f). The solar cell unit (32) includes a third surface (32s) on the first surface (31f), a fourth surface (32f) opposite to the third surface (32s), and a second side surface (32t) connecting the third and fourth surfaces (32f, 32s), and has a longitudinal direction being the first direction. The connection box (33) includes a conductor (33m) connected to a wire connected to an electrode in the solar cell unit (32), a housing (33b) accommodating the conductor (33m) and being along at least one of the first or second side surface (31t, 32t), and a cable (33c) electrically connected to the conductor (33m) and protruding from inside to outside the housing (33b).

## Description

### CROSS-REFERENCE TO RELATED APPLICATION

This application claims priority to Japanese Patent Application No. 2021-106679 filed on June 28, 2021, the entire disclosure of which is incorporated herein by reference.

### TECHNICAL FIELD

The present disclosure relates to a slat for a solar cell and a solar cell blind.

### BACKGROUND OF INVENTION

Blinds with functions such as daylighting and shading include blinds (also referred to as solar cell blinds) with multiple members (also referred to as slats) each including a sheet solar cell on its front or back surface (refer to, for example, Patent Literature 1).

### CITATION LIST

### PATENT LITERATURE

Patent Literature 1: Japanese Unexamined Patent Application Publication No. 2011-157729

### SUMMARY

One or more aspects of the present disclosure are directed to a slat for a solar cell and a solar cell blind.

In one aspect, a slat for a solar cell includes a plate-like slat body, a plate-like solar cell unit fixed to the plate-like slat body, and a connection box. The plate-like slat body includes a first surface, a second surface opposite to the first surface, and a first side surface. The plate-like slat body has a longitudinal direction being a first direction along the first surface. The plate-like solar cell unit includes a third surface on the first surface, a fourth surface opposite to the third surface, and a second side surface connecting the third surface and the fourth surface. The plate-like solar cell unit has a longitudinal direction being the first direction. The connection box includes a conductor, a housing, and a cable. The conductor is connected to a wire connected to an electrode in the plate-like solar cell unit. The housing accommodates the conductor and is along at least one of the first side surface or the second side surface. The cable is electrically connected to the conductor and protrudes from inside the housing to outside the housing.

In one aspect, a solar cell blind includes a plurality of the slats according to the above aspect. The plurality of slats is arranged in a fifth direction perpendicular to the first direction.

### BRIEF DESCRIPTION OF THE DRAWINGS

FIG. 1 is a perspective view of an example solar cell blind according to a first embodiment.
FIG. 2 is a side view of the example solar cell blind according to the first embodiment.
FIG. 3 is a plan view of an example slat according to the first embodiment.
FIG. 4 is a cross-sectional view of the example slat taken along line IV-IV in FIG. 3.
FIG. 5 is a side view of the example slat according to the first embodiment.
FIG. 6 is a plan view of an example slat body in the first embodiment.
FIG. 7 is a side view of the example slat body in the first embodiment.
FIG. 8 is a plan view of an example solar cell unit in the first embodiment.
FIG. 9 is a cross-sectional view of the example solar cell unit in the first embodiment.
FIG. 10 is a cross-sectional view of the example solar cell unit in the first embodiment.
FIG. 11 is a partial cross-sectional view of part XI of the example slat in FIG. 4.
FIG. 12 is a partial cross-sectional view of part XII of the example slat in FIG. 4.
FIG. 13 is a circuit diagram of an example electrical connection of multiple solar cell elements in the solar cell blind according to the first embodiment.
FIG. 14 is a flowchart of an example method for manufacturing a solar cell module.
FIG. 15 is a cross-sectional view of the solar cell module during manufacture, illustrating an example state.
FIG. 16 is a cross-sectional view of the solar cell module during manufacture, illustrating an example state.
FIG. 17 is a cross-sectional view of the solar cell module during manufacture, illustrating an example state.
FIG. 18 is a cross-sectional view of a part of a slat according to a variation of the first embodiment, corresponding to part XI in FIG. 4.
FIG. 19 is a plan view of an example slat according to a second embodiment.
FIG. 20 is a cross-sectional view of an example slat taken along line XX-XX in FIG. 19.
FIG. 21 is a partial cross-sectional view of part XXI of the example slat in FIG. 20.
FIG. 22 is a partial cross-sectional view of part XXII of the example slat in FIG. 20.
FIG. 23 is a cross-sectional view of a part of a slat according to a third embodiment, corresponding to part XXI in FIG. 20.
FIG. 24 is a cross-sectional view of a part of a slat according to the third embodiment, corresponding to part XXII in FIG. 20.
FIG. 25 is a cross-sectional view of a part of a slat according to a variation of the third embodiment, corresponding to part XXI in FIG. 20.
FIG. 26 is a cross-sectional view of a part of the slat according to the variation of the third embodiment, corresponding to part XXII in FIG. 20.
FIG. 27 is a plan view of an example slat according to a fourth embodiment.
FIG. 28 is a cross-sectional view of the example slat according to the fourth embodiment.
FIG. 29 is a cross-sectional view of a slat in a first example of a fifth embodiment.
FIG. 30 is a cross-sectional view of a slat in a second example of the fifth embodiment.
FIG. 31 is a cross-sectional view of a slat in a third example of the fifth embodiment.
FIG. 32 is a plan view of a slat in a first example of a sixth embodiment.
FIG. 33 is a rear view of the slat in the first example of the sixth embodiment.
FIG. 34 is a plan view of a slat in a second example of the sixth embodiment.
FIG. 35 is a perspective view of an example solar cell blind according to a seventh embodiment.
FIG. 36 is a plan view of an example solar cell unit in a variation.
FIG. 37 is a cross-sectional view of the example solar cell unit in the variation.
FIG. 38 is a circuit diagram of an example electrical connection of multiple solar cell elements in a solar cell blind according to a variation.

### DESCRIPTION OF EMBODIMENTS

Blinds with functions such as daylighting and shading include, for example, vertical blinds including slats with their longitudinal direction being a gravitational direction, and horizontal blinds including slats with their longitudinal direction being a horizontal direction.

Such a blind (also referred to as a solar cell blind) may include multiple members (also referred to as slats) each including a sheet solar cell on its front or back surface.

For a solar cell blind with, for example, a slat including a sheet solar cell on its front or back surface, the slat may be thicker. A slat with, for example, a junction box on its front or back surface to receive output from the solar cell may be thicker. Multiple slats in a vertical solar cell blind drawn in a direction being the horizontal direction can be bulky and degrade the daylighting function and the open-close function. Multiple slats in a horizontal solar cell blind drawn in a direction being upward can also be bulky and degrade the daylighting function and the open-close function.

For example, multiple thicker slats for solar cells may occupy a larger space (increase the space occupation rate) during storage or transportation and can be difficult to handle.

A slat for a solar cell and a solar cell blind is thus to be improved by reducing the thickness of the slat.

The inventors of the present disclosure have developed a technique for reducing the thickness of a slat for a solar cell for a solar cell blind.

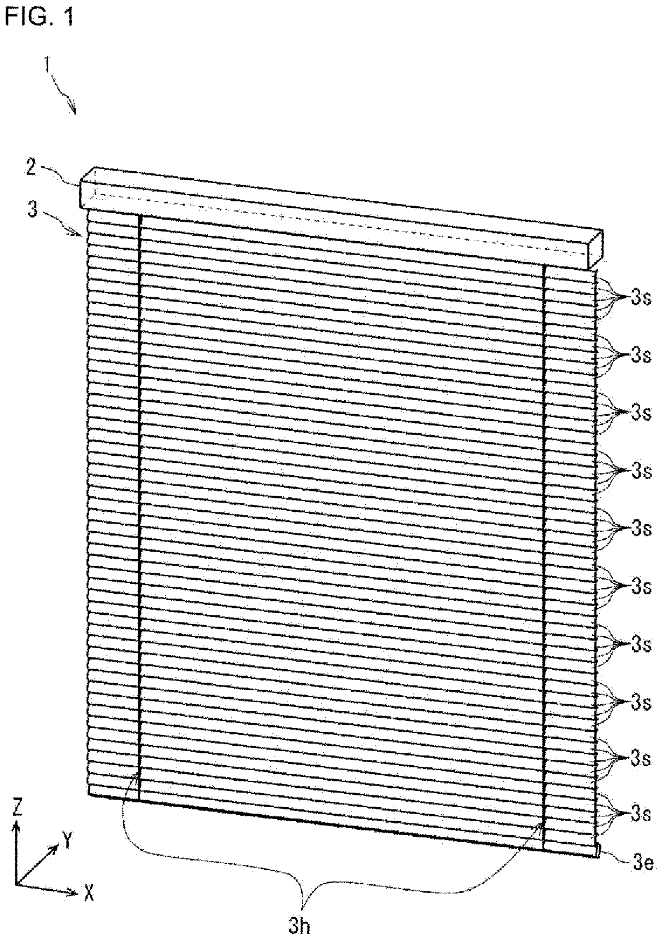

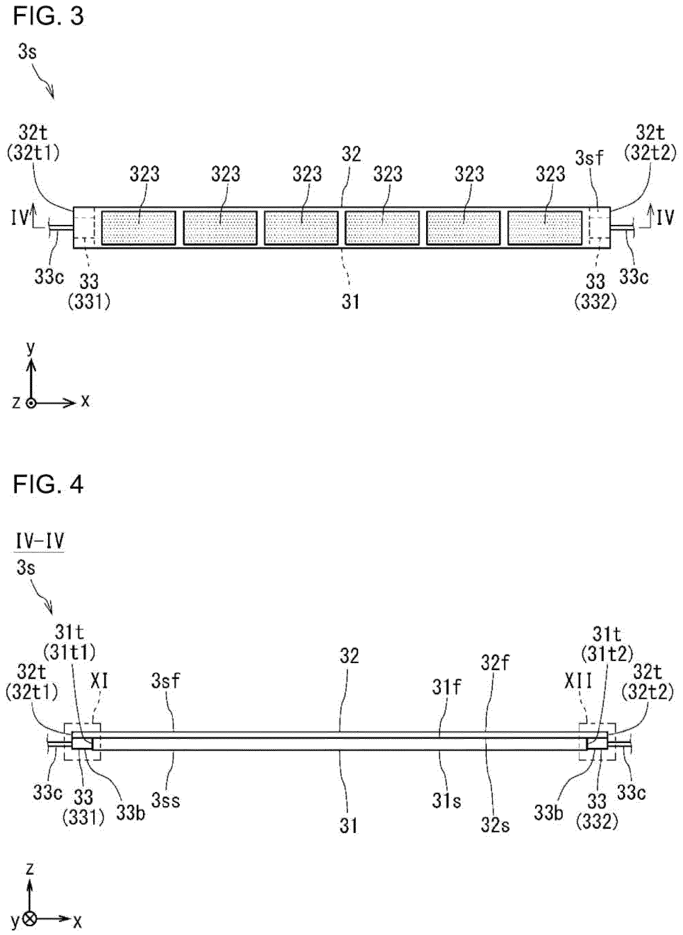

Embodiments of the present disclosure will now be described with reference to the drawings. In the drawings, the same reference numerals denote the components with the same or similar structures and functions, and such components are not described repeatedly. The drawings are schematic. FIGs. 1, 2, and 35 illustrate the right-handed XYZ coordinate system. In the XYZ coordinate system, the positive X-direction is a direction parallel to the horizontal direction, the negative Z-direction is a direction parallel to the gravitational direction, and the positive Y-direction is orthogonal to both the positive X-direction and the negative Z-direction. FIGs. 3 to 12 and 18 to 34 illustrate the right-handed xyz coordinate system. In the xyz coordinate system, the positive x-direction is the longitudinal direction of a slat 3s and a solar cell unit 32, the positive y-direction is the lateral direction of front and back surfaces of the slat 3s and the solar cell unit 32, and the positive z-direction is the direction orthogonal to both the positive x-direction and the positive y-direction.

### 1. First Embodiment

### 1-1. Schematic Structure of Solar Cell Blind

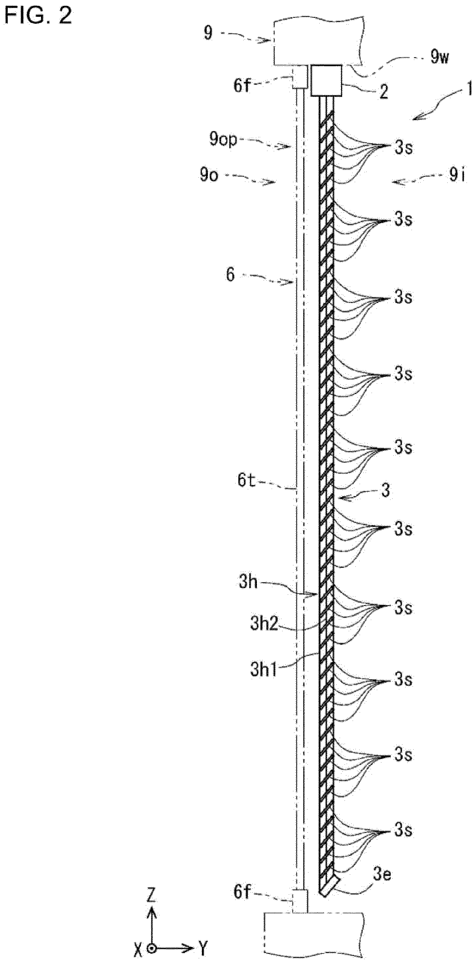

A schematic structure of a solar cell blind 1 as a solar cell device will be described with reference to FIGs. 1 and 2.

As illustrated in FIGs. 1 and 2, the solar cell blind 1 includes a base 2 and a blind unit 3. As illustrated in FIG. 2, the solar cell blind 1 is used, for example, near a window 6 located in an indoor space 9i in a building 9 and separating the indoor space 9i and an outdoor space 9o from each other. The window 6 includes, for example, a window frame 6f along a portion (also referred to as an opening edge) 9w defining an opening 9op of the building 9, and a plate-like transparent portion 6t inside the window frame 6f. Examples of the transparent portion 6t include a transparent plate such as a glass plate. In the example in FIG. 2, the transparent portion 6t extends along an XZ plane.

The base 2 includes various components and assemblies to perform the operations of the blind unit 3. The base 2 has, for example, its longitudinal direction being the horizontal direction. The longitudinal direction of the base 2 is the positive X-direction. In the example in FIGs. 1 and 2, the base 2 is a rectangular headbox above the blind unit 3. The base 2 may be, for example, fixed to an upper portion of the opening edge 9w or to a curtain box recessed along the opening edge 9w. The base 2 receives the blind unit 3 hung in, for example, the negative Z-direction being the gravitational direction.

The blind unit 3 includes, for example, multiple slats 3s. Each slat 3s is, for example, an elongated plate (also referred to as a plate member). Each slat 3s includes, for example, rectangular front and back surfaces. Each of the front and back surfaces of the slat 3s has, for example, its longitudinal direction being a first direction. In the example in FIGs. 1 and 2, the first direction is the negative X-direction or the positive X-direction being the horizontal direction. Each slat 3s further includes, for example, a side surface at its end in the positive X-direction and another side surface at its end in the negative X-direction. Each slat 3s has, for example, its thickness direction being a second direction. Each of the front and back surfaces of the slat 3s has, for example, its lateral direction being a third direction. Each slat 3s further includes, for example, a side surface at its end in the third direction and another side surface at its end in a fourth direction opposite to the third direction. The multiple slats 3s are, for example, arranged in a fifth direction perpendicular to the first direction. In the example in FIGs. 1 and 2, the fifth direction is the negative Z-direction being the gravitational direction. Thus, in the first embodiment, the blind unit 3 is a horizontal blind with the multiple horizontally elongated slats 3s.

The blind unit 3 includes, for example, a bottom rail 3e and multiple hangers 3h. The bottom rail 3e is located in a lowermost portion of the blind unit 3. The bottom rail 3e is, for example, an elongated member having its longitudinal direction being the first direction. The hangers 3h hang, for example, the slats 3s and the bottom rail 3e in this order from the base 2 in the negative Z-direction as the fifth direction. As illustrated in FIG. 1, the hangers 3h hang the slats 3s and the bottom rail 3e on multiple portions of the blind unit 3 in the first direction. In the example in FIG. 1, the hangers 3h include two hangers 3h. As illustrated in FIG. 2, each hanger 3h includes, for example, a ladder cord 3h1 and a lifting-lowering cord 3h2.

The ladder cord 3h1 is, for example, a cord with a ladder shape. The ladder cord 3h1 includes, for example, a pair of vertical cords hanging downward in the negative Z-direction as the fifth direction and multiple horizontal cords each connected between the pair of vertical cords. The pair of vertical cords are, for example, hung from the base 2 and connected to the bottom rail 3e. Each horizontal cord holds a single slat 3s from below. Each slat 3s is held by the multiple ladder cords 3h1 from below. The horizontal cords in the ladder cord 3h1 may be, for example, inclined with respect to the horizontal plane by an angle adjustor in the base 2. Thus, for example, the inclination angle of each slat 3s with respect to the horizontal plane can be changed. In the example in FIGs. 1 and 2, the horizontal plane extends along an XY plane. This allows the blind unit 3 to, for example, block or transmit light.

The lifting-lowering cord 3h2 includes, for example, a single cord hanging downward in the negative Z-direction as the fifth direction. The single cord is, for example, hung from the base 2, extends through through-holes in the multiple slats 3s, and is connected to the bottom rail 3e. The lifting-lowering cord 3h2 is, for example, reeled upward by a reel (also referred to as a lifting-lowering assembly) in the base 2 to lift the bottom rail 3e and pull the slats 3s upward, stacking the slats 3s on one another from below. This pulls the blind unit 3 toward the base 2 and folds the blind unit 3. In addition, the lifting-lowering cord 3h2 is, for example, unreeled downward by the lifting-lowering assembly to lower the bottom rail 3e and lower the slats 3s one after another. This unfolds the slats 3s downward to expand the blind unit 3.

The example structure illustrated in FIGs. 1 and 2 includes two ladder cords 3h1 and two lifting-lowering cords 3h2, but may be another structure. For example, the number of ladder cords 3h1 may differ from the number of lifting-lowering cords 3h2. For example, the ladder cords 3h1 and the lifting-lowering cords may be at different positions.

### 1-2. Slat for Solar Cell

### 1-2-1. Schematic Structure of Slat

A schematic structure of the slat 3s for a solar cell will be described with reference to FIGs. 3 to 5.

As illustrated in FIGs. 3 to 5, the slat 3s has, for example, its longitudinal direction being the negative x-direction as the first direction. In the example in FIGs. 3 to 5, the slat 3s is, for example, a rectangular strip. More specifically, the slat 3s includes, for example, a rectangular front surface 3sf and a rectangular back surface 3ss. The front surface 3sf faces, for example, in the positive z-direction opposite to the negative z-direction as the second direction perpendicular to the first direction (the negative x-direction in this example). The back surface 3ss faces, for example, in the second direction (the negative z-direction in this example). Each of the front surface 3sf and the back surface 3ss is, for example, along an xy plane. Each of the front surface 3sf and the back surface 3ss of the slat 3 s has its lateral direction being the negative y-direction as the third direction perpendicular to both the first direction (the negative x-direction in this example) and the second direction (the negative z-direction in this example). In other words, the front and back surfaces of the slat 3s each has its lateral direction being the third direction (the negative y-direction in this example).

Each slat 3s includes, for example, a slat body 31, a solar cell unit 32, and a connection box (also referred to as a junction box or a terminal box) 33.

### 1-2-2. Slat Body

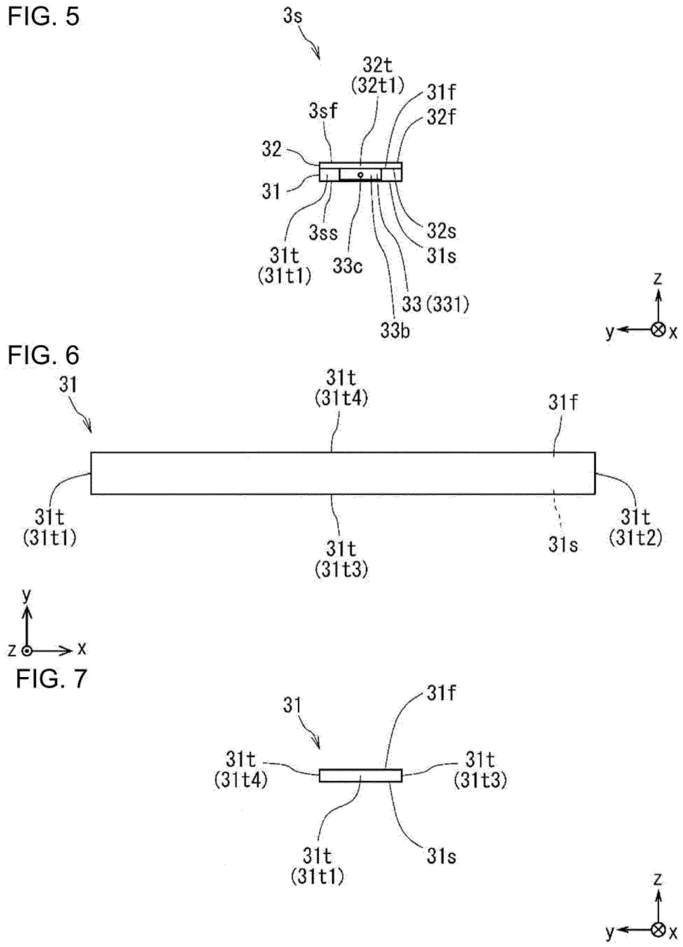

The slat body 31 will be described with reference to FIGs. 6 and 7.

As illustrated in FIGs. 6 and 7, the slat body 31 is, for example, an elongated plate. In other words, the slat body 31 is, for example, an elongated plate portion (also referred to as a plate). The slat body 31 has, for example, its longitudinal direction being the first direction (the negative x-direction in this example). Thus, the multiple slat bodies 31 in the solar cell blind 1 each have, for example, the longitudinal direction being the negative or positive X-direction as the first direction (the negative x-direction in this example) and are arranged in the negative Z-direction as the fifth direction perpendicular to the negative or positive X-direction as the first direction (the negative x-direction in this example).

The slat body 31 includes, for example, a front surface (also referred to as a first front surface) 31f as a first surface, a back surface (also referred to as a first back surface) 31s as a second surface opposite to the first front surface 31f, and side surfaces (also referred to as first side surfaces) 31t. The first side surfaces 31t connect the first front surface 31f and the first back surface 31s. In the example in FIGs. 6 and 7, the first front surface 31f faces in the positive z-direction perpendicular to the first direction (the negative x-direction in this example), and the first back surface 31s faces in the negative z-direction opposite to the first front surface 31f. Each of the first front surface 31f and the first back surface 31s is, for example, along the xy plane. The slat body 31 has, for example, its lateral direction being the third direction (the negative y-direction in this example). In other words, the slat body 31 has, for example, its lateral direction being the positive y-direction as the fourth direction opposite to the third direction (the negative y-direction in this example). The third direction (the negative y-direction in this example) and the fourth direction (the positive y-direction in this example) are each along the first front surface 31f and orthogonal to the first direction (the negative x-direction in this example). The slat body 31 is, for example, a rectangular strip. The first front surface 31f and the first back surface 31s of the slat body 31 each have, for example, the longitudinal direction being the first direction (the negative x-direction in this example) and the lateral direction being the third direction (the negative y-direction in this example) and the fourth direction (the positive y-direction in this example). More specifically, the slat body 31 includes, for example, the rectangular first front surface 31f and the rectangular first back surface 31s. In this case, the slat body 31 includes, for example, four first side surfaces 3 1t. The four first side surfaces 31t include, for example, a first side surface 31t1 facing in the negative x-direction (also referred to as a first A-side surface), a first side surface 31t2 facing in the positive x-direction (also referred to as a first B-side surface), a first side surface 31t3 facing in the negative y-direction (also referred to as a first C-side surface), and a first side surface 31t4 facing in the positive y-direction (also referred to as a first D-side surface).

Examples of the material for the slat body 31 include a highly light-shielding material such as wood, a metal such as aluminum, or a resin. The slat body 31 may include, for example, a base layer made of wood, aluminum, or a resin coated with a layer of titanium dioxide or fluorine. The slat body 31 may have a thickness of, for example, about 0.2 to 5 millimeters (mm) in the second direction (the negative z-direction in this example).

### 1-2-3. Solar Cell Unit

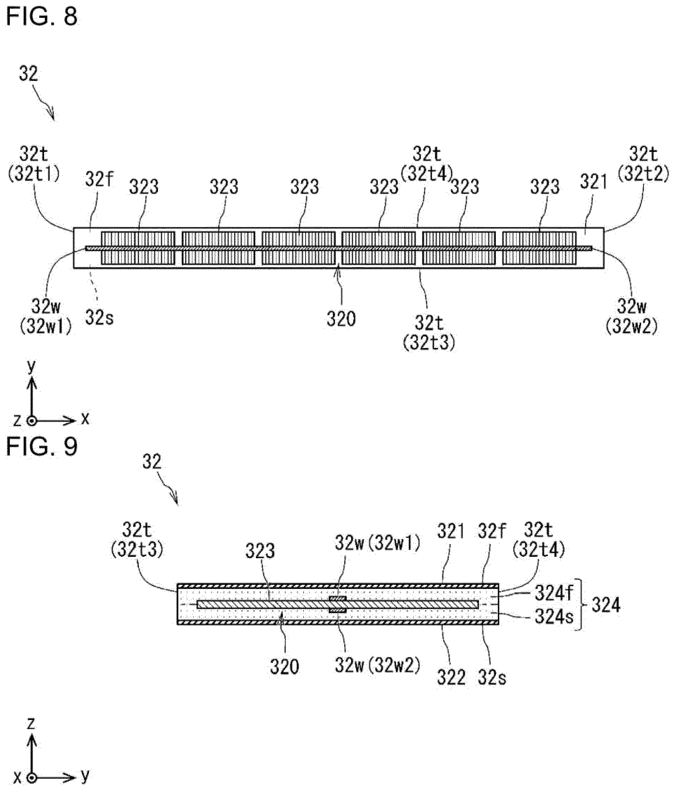

The solar cell unit 32 will be described with reference to FIGs. 8 to 10.

As illustrated in FIGs. 8 to 10, the solar cell unit 32 is, for example, a solar cell module including multiple solar cell elements 323. The solar cell unit 32 is, for example, an elongated plate. In other words, the solar cell unit 32 is, for example, an elongated plate portion (also referred to as a plate). The solar cell unit 32 has, for example, its longitudinal direction being the first direction (the negative x-direction in this example). Thus, multiple solar cell units 32 in the solar cell blind 1 each have, for example, the longitudinal direction being the negative or positive X-direction as the first direction (the negative x-direction in this example) and are arranged in the negative Z-direction as the fifth direction perpendicular to the first direction (the negative x-direction in this example).

The solar cell unit 32 is, for example, fixed to the slat body 31. The solar cell unit 32 is, for example, fixed to the first front surface 31f in the first surface of the slat body 31. The solar cell unit 32 includes, for example, a back surface (also referred to as a second back surface) 32s as a third surface, a front surface (also referred to as a second front surface) 32f as a fourth surface opposite to the second back surface 32s, and side surfaces (also referred to as second side surfaces) 32t connecting the second back surface 32s and the second front surface 32f. For example, the second back surface 32s is located on the first front surface 31f of the solar cell unit 32. In other words, the first front surface 31f is located along, for example, the second back surface 32s.

In the example in FIGs. 8 to 10, the second front surface 32f faces in the positive z-direction perpendicular to the first direction (the negative x-direction in this example), and the second back surface 32s faces in the negative z-direction opposite to the second front surface 32f. Each of the second front surface 32f and the second back surface 32s is, for example, along the xy plane. The solar cell unit 32 has, for example, its lateral direction being the third direction (the negative y-direction in this example). In other words, the solar cell unit 32 has, for example, its lateral direction being the fourth direction (the positive y-direction in this example). The solar cell unit 32 is, for example, a rectangular strip. The second front surface 32f and the second back surface 32s of the solar cell unit 32 each have, for example, the longitudinal direction being the first direction (the negative x-direction in this example) and the lateral direction being the third direction (the negative y-direction in this example) and the fourth direction (the positive y-direction in this example). More specifically, the solar cell unit 32 includes, for example, the rectangular second front surface 32f and the rectangular second back surface 32s. In this case, the solar cell unit 32 includes, for example, four second side surfaces 32t. The four second side surfaces 32t include, for example, a second side surface 32t1 facing in the negative x-direction (also referred to as a second A-side surface), a second side surface 32t2 facing in the positive x-direction (also referred to as a second B-side surface), a second side surface 32t3 facing in the negative y-direction (also referred to as a second C-side surface), and a second side surface 32t4 facing in the positive y-direction (also referred to as a second D-side surface).

The solar cell unit 32 is, for example, fixed to the slat body 31 by bonding with an adhesive or double-sided tape. Examples of the adhesive include a urethane liquid adhesive, an epoxy liquid adhesive, an acrylic liquid adhesive, and a hot melt adhesive based on ethylene-vinyl acetate (EVA) or amorphous polyalphaolefin (APAO). In the example in FIGs. 3 to 5, the second back surface 32s of the solar cell unit 32 is bonded to the first front surface 31f of the slat body 31 with, for example, an adhesive or double-sided tape. In other words, for example, the first front surface 31f of the slat body 31 and the second back surface 32s of the solar cell unit 32 are in close contact with each other with a thin layer (also referred to as a bonding layer) of an adhesive or double-sided tape in between.

In each solar cell unit 32, for example, the second front surface 32f located opposite to the slat body 31 includes the front surface 3sf of the slat 3s. Thus, for example, the second front surface 32f serves as a light-receiving surface of the slat 3s that mainly receive incident light. For example, the first back surface 31s of the slat body 31 includes the back surface 3ss of the slat 3s. The solar cell unit 32 has a thickness of, for example, about 1 to 2 mm in the second direction (the negative z-direction in this example). The bonding layer between the slat body 31 and the solar cell unit 32 has a thickness of, for example, less than or equal to 1 mm in the second direction (the negative z-direction in this example). The bonding layer having an average thickness of about 0.1 mm in the second direction (the negative z-direction in this example) allows the slat 3s to be still thinner.

As illustrated in FIGs. 8 to 10, the solar cell unit 32 includes, for example, a first protective layer 321, a second protective layer 322, a solar cell 320, and a filler layer 324. First Protective Layer 321

The first protective layer 321 includes, for example, the second front surface 32f of the solar cell unit 32. The first protective layer 321 is, for example, light-transmissive. More specifically, the first protective layer 321 transmits, for example, light with a wavelength in a specific range. The wavelength in the specific range includes, for example, a wavelength of light photoelectrically convertible by the multiple solar cell elements 323. For the wavelength in the specific range including a wavelength of sunlight with higher irradiation intensity, the solar cell unit 32 can have higher photoelectric conversion efficiency. Examples of the material for the first protective layer 321 include a light-transmissive resin such as a fluorine-based resin. This allows, for example, the solar cell unit 32 to be thinner and lighter. Examples of the fluorine-based resin include fluorinated ethylene propylene (FEP), ethylene tetrafluoroethylene (ETFE), and ethylene chlorotrifluoroethylene (ECTFE). The first protective layer 321 may include, for example, two or more resin layers. The first protective layer 321 may have a thickness of, for example, about 0.05 to 0.2 mm in the second direction (the negative z-direction in this example).

### Solar Cell 320

The solar cell 320 is, for example, between the first protective layer 321 and the second protective layer 322. The solar cell 320 includes, for example, multiple solar cell elements 323 and multiple wires 32w.

The multiple solar cell elements 323 are, for example, between the first protective layer 321 and the second protective layer 322. In the first embodiment, the solar cell elements 323 are arranged substantially two-dimensionally. In the example in FIGs. 8 to 10, the multiple (e.g., six) solar cell elements 323 are arranged in a plane along the xy plane. More specifically, the solar cell elements 323 are, for example, arranged in a row in the longitudinal direction of the slat body 31. With two or more solar cell elements 323 not arranged in the positive y-direction, which is the lateral direction of the front and back surfaces of the slat body 31, the solar cell elements 323 in the solar cell unit 32 can have fewer gaps between them. In this case, for example, with two or more solar cell elements 323 in each solar cell unit 32 not arranged in the direction perpendicular to the first direction (the positive x-direction in this example), the solar cell elements 323 in multiple solar cell units 32 can have fewer gaps between them. This allows, for example, the front surfaces of the slat bodies 31 to be used efficiently and the solar cell elements 323 to cover a larger area. This can improve the power generation of the solar cell blind 1.

The multiple solar cell elements 323 each can, for example, convert light energy to electrical energy. The solar cell elements 323 each include, for example, a surface (also referred to as a first element surface) facing in the positive z-direction toward the first protective layer 321 and a surface (also referred to as a second element surface) opposite to the first element surface facing in the negative z-direction. For example, the first element surface mainly serves as a surface to receive light (also referred to as a light-receiving surface), and the second element surface mainly serves as a surface to receive no light (also referred to as a non-light receiving surface). The solar cell elements 323 each include, for example, a crystalline semiconductor substrate such as a crystalline silicon substrate, electrodes (also referred to as front electrodes) on the first element surface of the semiconductor substrate, and electrodes (also referred to as back electrodes) on the second element surface of the semiconductor substrate.

In this case, the semiconductor substrate includes, for example, an area mainly with a first conductivity type (also referred to as a first conductivity type area) and an area with a second conductivity type opposite to the first conductivity type (also referred to as a second conductivity type area). The first conductivity type area is located in, for example, a portion of the semiconductor substrate at the second element surface in the negative z-direction. The second conductivity type area is located in, for example, a surface portion of the semiconductor substrate at the first element surface in the positive z-direction. In this case, for example, the first conductivity type is p-type, and the second conductivity type is n-type. For example, the first conductivity type is n-type, and the second conductivity type is p-type. This structure allows the semiconductor substrate to have a p-n junction at an interface between the first conductivity type area and the second conductivity type area. The semiconductor substrate has a thickness of, for example, about 0.1 to 0.3 mm in the second direction (the negative z-direction in this example).

The front electrodes include, for example, multiple electrodes for current collection (also referred to as front current-collecting electrodes) such as finger electrodes, and at least one output electrode (also referred to as a front output electrode) such as a busbar electrode. For example, the front electrodes may include multiple front current-collecting electrodes substantially parallel to one another along the third direction (the negative y-direction in this example), and one front output electrode along the first direction (the negative x-direction in this example) and orthogonal to the front current-collecting electrodes. In this case, for example, the front output electrode such as a busbar electrode has its longitudinal direction being the longitudinal direction of the solar cell unit 32. In other words, for example, the front output electrode such as a busbar electrode has its longitudinal direction being the longitudinal direction of the slat body 31. In addition, for example, the front current-collecting electrodes such as finger electrodes have their longitudinal direction being the lateral direction of the solar cell unit 32. In other words, for example, the front current-collecting electrodes such as finger electrodes have their longitudinal direction being the lateral direction of the slat body 31. The front electrodes each have a thickness of, for example, about 0.1 to 0.4 mm in the second direction (the negative z-direction in this example). For example, the front electrodes each having a thickness as small as 0.1mm in the second direction (the negative z-direction in this example) allow the solar cell 320, the solar cell unit 32, and the slat 3s to be thinner.

The back electrodes include, for example, electrodes for current collection (also referred to as back current-collecting electrodes) and at least one output electrode (also referred to as a back output electrode) such as a busbar electrode. For example, the back electrodes may include one back output electrode along the first direction (the negative x-direction in this example) on the second element surface of the semiconductor substrate, and the back current-collecting electrodes located on substantially all portions without the back output electrode on the second element surface of the semiconductor substrate. The back electrodes each have, for example, a thickness of about 0.1 to 0.4 mm in the second direction (the negative z-direction in this example). For example, the back electrodes each having a thickness as small as 0.1mm in the second direction (the negative z-direction in this example) allow the solar cell 320, the solar cell unit 32, and the slat 3s to be thinner.

The multiple wires 32w electrically connect, for example, the multiple solar cell elements 323 to one another and can output electricity from the solar cell 320. Examples of the wires 32w include linear or strip-shaped conductive metal members. The wires 32w include, for example, a first wire 32w1 and a second wire 32w2. The first wire 32w1 connects, for example, the front output electrodes facing the first protective layer 321 in the solar cell elements 323 to one another. The first wire 32w1 may be bonded to the front output electrodes with, for example, an alloy with a low melting point, such as solder, or a single metal with a low melting point. The first wire 32w1 has, for example, its one end extending outside the solar cell unit 32 through a through-hole in the second protective layer 322 or one second side surface 32t. The second wire 32w2 connects, for example, the back output electrodes facing the second protective layer 322 in the solar cell elements 323 to one another. The second wire 32w2 may be bonded to the back output electrodes with, for example, an alloy with a low melting point, such as solder, or a single metal with a low melting point. The second wire 32w2 has, for example, its one end extending outside the solar cell unit 32 through a through-hole in the second protective layer 322 or one second side surface 32t. Examples of the wires 32w include copper foil with a thickness of about 0.1 to 0.4 mm in the second direction (the negative z-direction in this example) and a width of about 1 to 5 mm. Filler Layer 324

The filler layer 324 surrounds, for example, the solar cell 320 between the first protective layer 321 and the second protective layer 322. In other words, the filler layer 324 surrounds, for example, the multiple solar cell elements 323 between the first protective layer 321 and the second protective layer 322. In other words, the filler layer 324 fills, for example, a space (also referred to as a gap space) between the first protective layer 321 and the second protective layer 322 to surround the solar cell 320.

The filler layer 324 includes, for example, a filler layer (also referred to as a first filler layer) 324f near the second front surface 32f and a filler layer (also referred to as a second filler layer) 324s near the second back surface 32s. The first filler layer 324f covers, for example, all surfaces of the solar cell 320 nearer the first protective layer 321. In other words, the first filler layer 324f covers the multiple solar cell elements 323 between the first protective layer 321 and the multiple solar cell elements 323. The second filler layer 324s covers, for example, all surfaces of the solar cell 320 nearer the second protective layer 322. In other words, the second filler layer 324s covers the multiple solar cell elements 323 between the second protective layer 322 and the multiple solar cell elements 323. The solar cell 320 is thus, for example, surrounded by and held between the first filler layer 324f and the second filler layer 324s. The filler layer 324 can thus, for example, maintain the orientation of the solar cell 320. The first filler layer 324f and the second filler layer 324s may each have a thickness of, for example, about 0.2 to 0.6 mm in the second direction (the negative z-direction in this example).

The filler layer 324 is, for example, light-transmissive. More specifically, the filler layer 324 transmits, for example, light with a wavelengths in the specific range described above. For example, with at least the first filler layer 324f of the first filler layer 324f and the second filler layer 324s in the filler layer 324 being light-transmissive, incident light through the second front surface 32f can reach the solar cell 320. The second filler layer 324s may not transmit, for example, light with a wavelength in the specific range described above. Examples of the material for the first filler layer 324f and the second filler layer 324s include EVA, an ionomer, and an olefin.

### Second Protective Layer 322

The second protective layer 322 includes, for example, the second back surface 32s of the solar cell unit 32. The second protective layer 322 can protect, for example, the solar cell 320 on the second back surface 32s. The second protective layer 322 may be made of, for example, a resin. Examples of the second protective layer 322 include a back sheet including the second back surface 32s. The back sheet may have a thickness of, for example, about 0.05 to 0.2 mm in the second direction (the negative z-direction in this example). Examples of the material for the back sheet include a thermoplastic resin such as polycarbonate, and a fluorine-based resin such as FEP, ETFE, or ECTFE. Examples of the material for the second protective layer 322 may include one of or at least one of a polyvinyl fluoride (PVF) resin, a polyethylene terephthalate (PET) resin, and a polyethylene naphthalate (PEN) resin. The second protective layer 322 may include, for example, two or more resin layers. In this case, the second protective layer 322 may be made of, for example, two or more different resins. The second protective layer 322 has, for example, the same or similar shape as the first protective layer 321 as viewed in plan from the second back surface 32s. For example, the first protective layer 321 and the second protective layer 322 may each have an elongated rectangular profile as viewed in plan from the second back surface 32s.

### 1-2-4. Connection Box

As illustrated in FIGs. 3 and 4, each slat 3s includes two connection boxes 33. The two connection boxes 33 include, for example, a first connection box 331 and a second connection box 332.

### First Connection Box

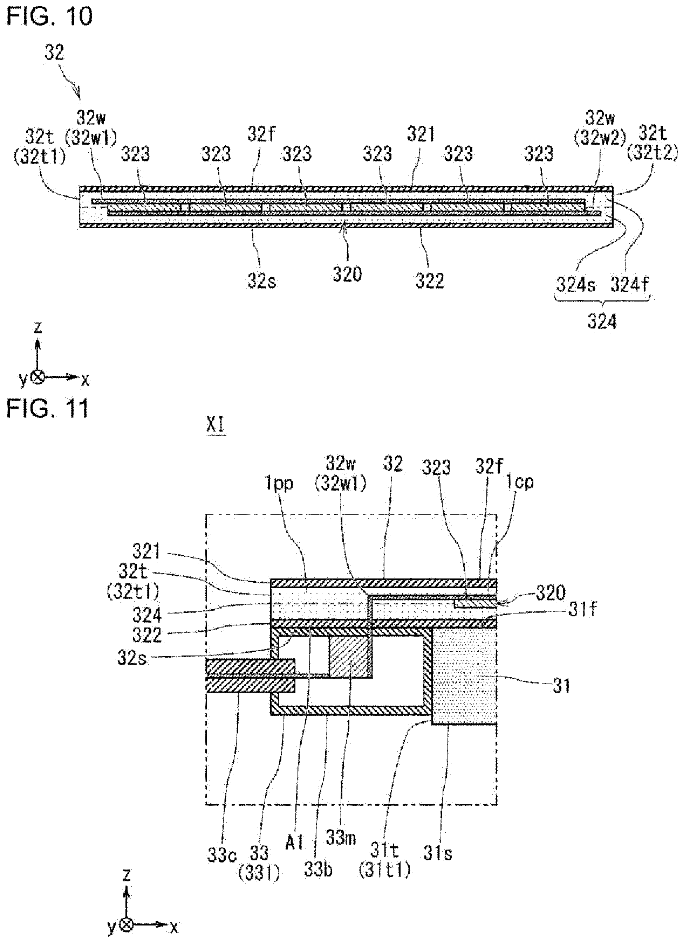

The first connection box 331 will be described with reference to FIG. 11.

As illustrated in FIG. 11, the first connection box 331 includes, for example, a conductor 33m, a housing 33b, and a cable 33c.

The conductor 33m is, for example, connected to a wire connected to the electrodes in the solar cell unit 32. In the example in FIG. 11, the conductor 33m is connected to the first wire 32w1 connected to the front electrode in the solar cell element 323. The conductor 33m may be made of, for example, one or more conductive members such as metals. The first wire 32w1 may be connected to the conductor 33m by, for example, soldering or clamping with a screw.

The housing 33b accommodates, for example, the conductor 33m. The housing 33b includes, for example, a hollow portion in which the conductor 33m is located, a through-hole receiving the first wire 32w1 extending from the solar cell unit 32, and a through-hole receiving the cable 33c. The conductor 33m is, for example, fixed to an inner wall of the housing 33b by screwing or fitting. The housing 33b may be made of, for example, an insulating resin.

The housing 33b is, for example, located along the side surface (first side surface) 31t of the slat body 31. This allows, for example, the slat 3 s to be thinner. Thus, for example, when the multiple slats 3s in the horizontal solar cell blind 1 are drawn in a direction being upward, the slats 3s are less likely to be bulky, improving the daylighting function and the open-close function. In addition, for example, this reduces, during storage and transportation, the space occupation rate of the slats 3s before incorporated in the solar cell blind 1 and facilitates the handling of the slats 3s.

In the first embodiment, the housing 33b in the first connection box 331 is located, for example, along the first A-side surface 31t1 in the first side surface 31t at the end of the slat body 31 in the first direction (the negative x-direction in this example). In other words, the first A-side surface 31t1 in the first side surface 31t located along the housing 33b in the first connection box 331 is at the end of the slat body 31 in the first direction (the negative x-direction in this example). This allows, for example, the slat 3s to easily be a simple rectangular strip. This allows, for example, the slat 3s to have a simpler structure.

In the example in FIG. 11, the solar cell unit 32 includes a portion (also referred to as a first middle portion) 1cp as a first portion located along the slat body 31 and a portion (also referred to as a first protrusion) 1pp as a second portion protruding in the first direction (the negative x-direction in this example) from the slat body 31. The housing 33b is located along an area (also referred to as a first area) A1 including a surface of the first protrusion 1pp as the second portion of the second back surface 32s in the third surface and along the first side surface 31t (more specifically, the first A-side surface 31t1). With the housing 33b in the first connection box 331 along the first side surface 31t of the slat body 31, for example, the slat 3s can be thinner.

In this case, the housing 33b is fixed to one or more of the second back surface 32s of the solar cell unit 32 and the first side surface 31t (more specifically, the first A-side surface 31t1) of the slat body 31 with, for example, an adhesive or double-sided tape. Examples of the adhesive may include a urethane adhesive, an epoxy adhesive, an acrylic liquid adhesive, and a hot melt adhesive based on EVA or APAO. The housing 33b has a thickness of, for example, about 1 to 3 mm in the second direction (the negative z-direction in this example). For example, the housing 33b may be thinner than the slat body 31 in the second direction (the negative z-direction in this example).

The cable 33c is, for example, electrically connected to the conductor 33m. The cable 33c is thus, for example, connected to the electrodes in the solar cell unit 32 with the conductor 33m and the first wire 32w1. The cable 33c protrudes from inside the housing 33b to outside the housing 33b. The cable 33c includes, for example, a conductive wire with its periphery covered with an insulating protective film. The conductive wire in the cable 33c may be connected to the conductor 33m by, for example, soldering or clamping with a screw. The cable 33c may have a diameter of, for example, about 1 to 2 mm. The conductor wire may have a diameter set as appropriate for, for example, the magnitude of a current that can be output from the solar cell units 32. The cable 33c can, for example, electrically connect the solar cell units 32 to each other in two adjacent slats 3s. The cable 33c may also be connectable to, for example, a portion located outside the blind unit 3, such as the base 2.

For example, the first wire 32w1 as a wire connected to the electrodes in the solar cell unit 32 is connected to the cable 33c with the conductor 33m in the first connection box 331 that has a constant positional relationship with the solar cell unit 32. Thus, for example, when the inclination angle of the multiple slats 3s in the solar cell blind 1 with respect to the horizontal plane is changed by the angle adjustor and when the slats 3s are lifted or lowered by the lifting-lowering assembly, the first wire 32w1 extending from the solar cell unit 32 is less likely to deform. The first wire 32w1 is thus, for example, less likely to be damaged, improving the durability of the slats 3s. This can improve, for example, the durability of the solar cell blind 1. In addition, for the multiple slats 3s before incorporated in the solar cell blind 1, for example, the first wire 32w1 extending from the solar cell unit 32 is less likely to deform during transportation. The first wire 32w1 is thus, for example, less likely to be damaged, improving the durability of the slats 3s.

### Second Connection Box

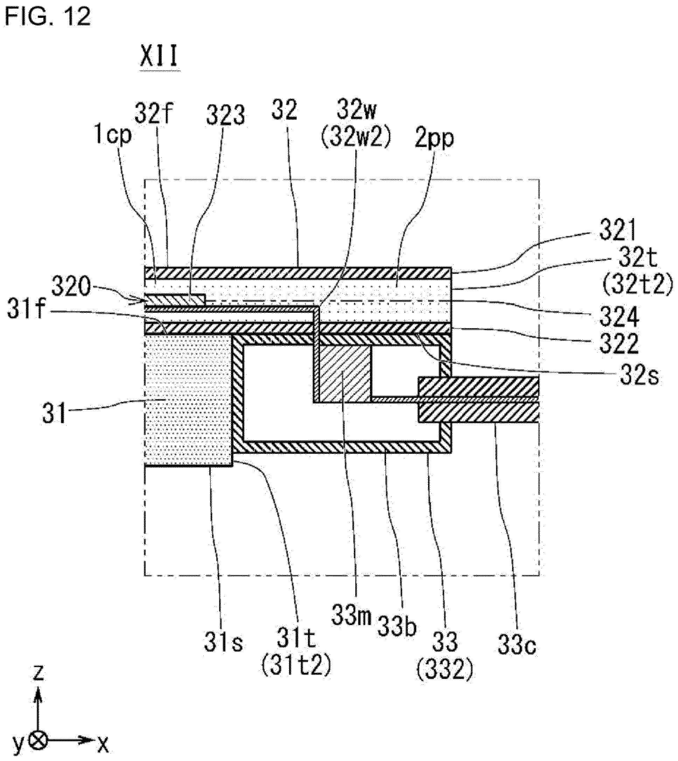

The second connection box 332 will be described with reference to FIG. 12.

As illustrated in FIG. 12, the second connection box 332 has, for example, the same or similar structure as the first connection box 331. In other words, the second connection box 332 includes, for example, the conductor 33m, the housing 33b, and the cable 33c, similarly to the first connection box 331. The second connection box 332 will be described below, focusing on differences from the first connection box 331.

In the example in FIG. 12, the second wire 32w2 connected to the back electrodes in the solar cell elements 323 is connected to the conductor 33m. The second wire 32w2 may be connected to the conductor 33m by, for example, soldering or clamping with a screw. The housing 33b accommodating the conductor 33m has a through-hole receiving the second wire 32w2, in place of the first wire 32w1. In the first embodiment, the housing 33b in the second connection box 332 is, for example, located along the first B-side surface 31t2 in the first side surface 31t at the end of the slat body 31 in the opposite direction (the positive x-direction in this example) of the first direction (the negative x-direction in this example). In other words, the first B-side surface 31t2 in the first side surface 31t located along the housing 33b in the second connection box 332 is at the end of the slat body 31 in the direction (the positive x-direction in this example) opposite to the first direction (the negative x-direction in this example). This allows, for example, the slat 3s to be thinner. More specifically, for example, the solar cell unit 32 includes the first middle portion 1cp as the first portion located along the slat body 31 and a portion (also referred to as a second protrusion) 2pp as a portion protruding from the slat body 31 in the direction (the positive x-direction in this example) opposite to the first direction (the negative x-direction in this example). The housing 33b is, for example, located along an area including a surface of the second protrusion 2pp of the second back surface 32s in the third surface and along the first side surface 31t (more specifically, the first B-side surface 3112). With the housing 33b in the second connection box 332 along the first side surface 31t of the slat body 31, for example, the slat 3s can be thinner. In this case, the housing 33b is fixed to one or more of the second back surface 32s of the solar cell unit 32 and the first side surface 31t (more specifically, the first B-side surface 3112) of the slat body 31 with, for example, an adhesive or double-sided tape. The cable 33c is, for example, connected to the electrodes in the solar cell unit 32 with the conductor 33m and the second wire 32w2.

For example, the second wire 32w2 as a wire connected to the electrodes in the solar cell unit 32 is connected to the cable 33c with the conductor 33m in the second connection box 332 that has a constant positional relationship with the solar cell unit 32. Thus, for example, when the inclination angle of the multiple slats 3s in the solar cell blind 1 with respect to the horizontal plane is changed by the angle adjustor and when the slats 3s are lifted or lowered by the lifting-lowering assembly, the second wire 32w2 extending from the solar cell unit 32 is less likely to deform. The second wire 32w2 is thus, for example, less likely to be damaged, improving the durability of the slats 3s. This can improve, for example, the durability of the solar cell blind 1. In addition, for the multiple slats 3s before incorporated in the solar cell blind 1, for example, the second wire 32w2 extending from the solar cell unit 32 is less likely to deform during transportation. The second wire 32w2 is thus, for example, less likely to be damaged, improving the durability of the slats 3s.

### Electrical Connection between Multiple Solar Cell Units

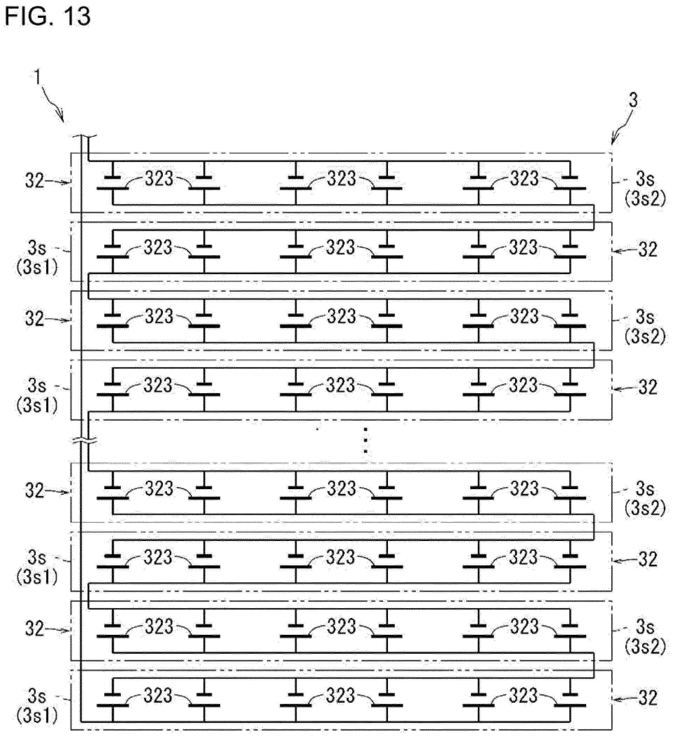

In the solar cell blind 1, the solar cell units 32 may be electrically connected in series between adjacent slats 3s as illustrated in, for example, FIG. 13.

In the example described below, two adjacent slats 3s include a first slat 3s1 and a second slat 3s2. In this case, for example, the first slat 3s1 is located with the first direction (the negative x-direction in this example) being the negative X-direction, and the second slat 3s2 is located with the first direction (the negative x-direction in this example) being the positive X-direction. For example, the cable 33c in the first connection box 331 in the first slat 3s1 and the cable 33c in the second connection box 332 in the second slat 3s2 adjacent to the first slat 3s1 may be connected to each other.

### 1-2-5. Manufacture of Solar Cell Unit

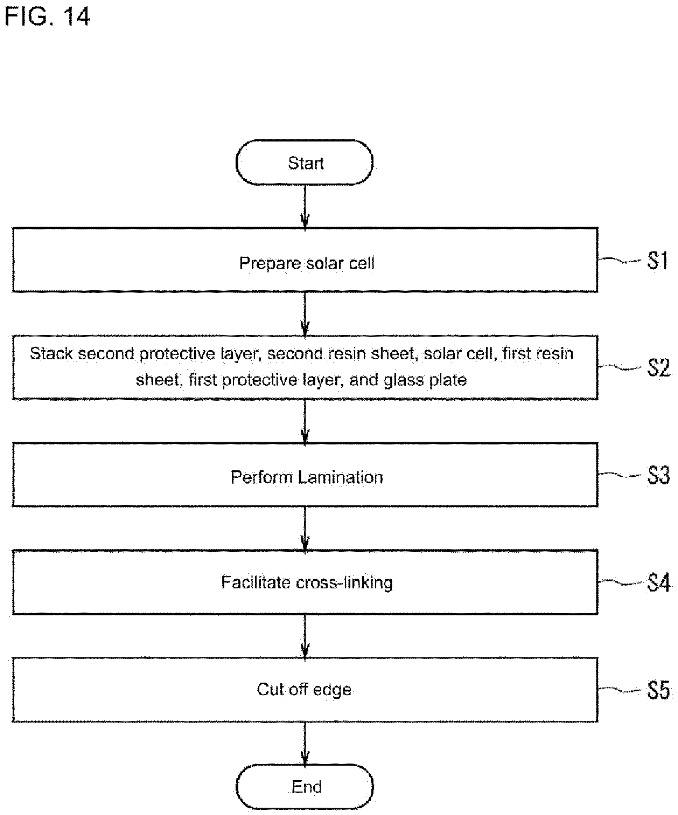

A method for manufacturing the solar cell unit 32 will be described with reference to FIGs. 14 to 17. FIG. 14 is a flowchart of an example method for manufacturing the solar cell unit 32. For example, the solar cell unit 32 can be manufactured by performing steps S1 to S5 in FIG. 14 sequentially.

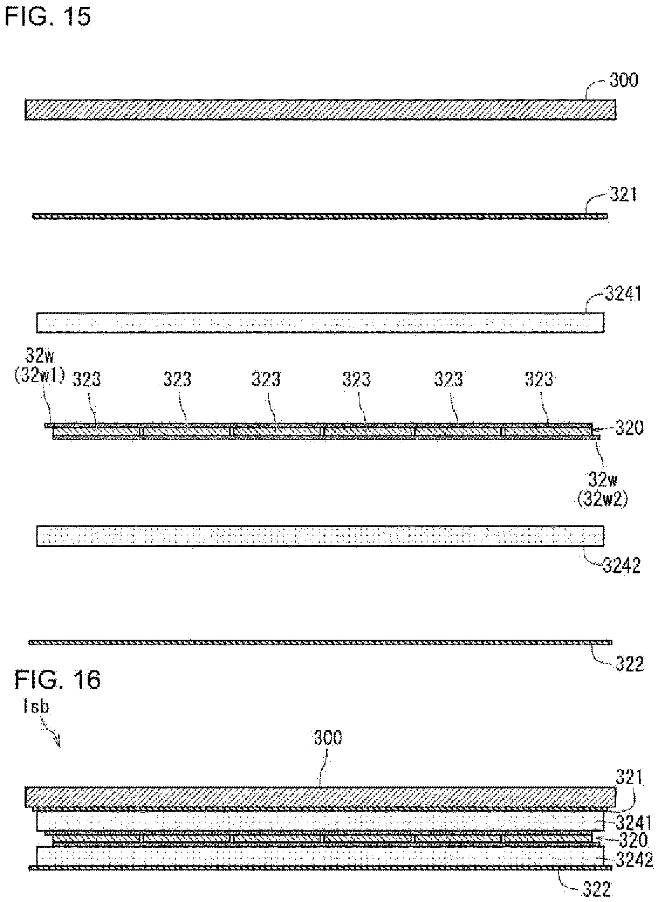

In step S1, for example, the solar cell 320 is prepared. The solar cell 320 can be prepared by electrically connecting the multiple solar cell elements 323 to one another with the multiple wires 32w, as illustrated in, for example, FIG. 15. For example, the multiple solar cell elements 323 are electrically connected in parallel by connecting the first wire 32w1 to each front output electrode in the solar cell elements 323, and connecting the second wire 32w2 to each back output electrode in the solar cell elements 323.

In step S2, as illustrated in, for example, FIGs. 15 and 16, the second protective layer 322, a second sheet 3242, the solar cell 320, a first sheet 3241, the first protective layer 321, and a glass plate 300 are stacked on one another in this order into a first stack 1sb. The glass plate 300 is, for example, a flat plate with smooth front and back surfaces. The front and back surfaces of the glass plate 300 are larger than, for example, the second front surface 32f of the solar cell unit 32. One surface of the first protective layer 321 undergoes, for example, treatment to activate the surface, such as corona treatment or plasma treatment, and is placed in contact with the first sheet 3241. The first sheet 3241 is, for example, a resin sheet (e.g., EVA sheet) containing a cross-linking agent as a base for the first filler layer 324f. The second sheet 3242 is, for example, a resin sheet (e.g., EVA sheet) containing a cross-linking agent as a base for the second filler layer 324s.

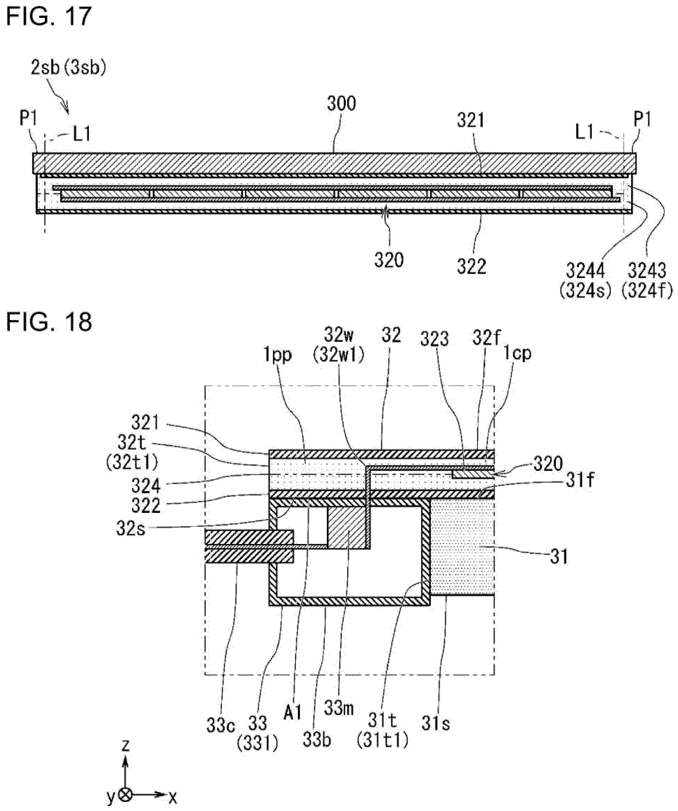

In step S3, for example, the first stack 1sb is laminated. The first stack 1sb is integrated using, for example, a lamination device (laminator). In the laminator, for example, the first stack 1sb is placed on a metal plate on a heater in a chamber and heated while the chamber is being decompressed. The first sheet 3241 and the second sheet 3242 are to be flowable to a certain degree by heating. In this state, the first stack 1sb in the chamber is pressed with, for example, a diaphragm sheet to obtain a second stack 2sb in which the layers in the first stack 1sb are bonded to one another, as illustrated in FIG. 17. The flat glass plate 300 reduces, for example, wrinkles in the first protective layer 321. For example, the first sheet 3241 is to be first temporary filler layer 3243 as the resin cross-links. For example, the first temporary filler layer 3243 adheres to the glass plate 300 along the outer periphery of the first protective layer 321. For example, the second sheet 3242 is to be a second temporary filler layer 3244 as the resin cross-links.

In step S4, for example, the second stack 2sb is heated in a furnace (also referred to as a cross-linking furnace) to cause the resins to cross-link further in the first temporary filler layer 3243 and the second temporary filler layer 3244. The temperature at which the second stack 2sb is heated in the furnace is, for example, set higher than the temperature at which the first stack 1sb is heated in the laminator. As illustrated in, for example, FIG. 17, the first temporary filler layer 3243 is to be the first filler layer 324f as the resin cross-links further. For example, the second temporary filler layer 3244 is to be the second filler layer 324s as the resin cross-links further. As illustrated in, for example, FIG. 17, the second stack 2sb is to be a third stack 3sb as the resins cross-link in the first temporary filler layer 3243 and the second temporary filler layer 3244.

In step S5, for example, a peripheral edge P1 of the third stack 3sb is cut off. The peripheral edge P1 is, for example, a looped portion along the outer periphery of the third stack 3sb as viewed in plan. In FIG. 17, the thin dot-dash lines indicate cutting lines L1 at the boundary between the peripheral edge P1 and a portion inside the peripheral edge P1 of the third stack 3sb. The third stack 3sb is cut off along the cutting lines L1 with, for example, a cutter to cut off the looped peripheral edge P1 from the third stack 3sb. For example, a portion of the first temporary filler layer 3243 adhering to the glass plate 300 is cut off to separate the glass plate 300 from the third stack 3sb. In this manner, the planar solar cell unit 32 is obtained as illustrated in FIGs. 8 to 10.

### 1-2-6. Variations of Slat

In the first embodiment, for example, the housing 33b in the connection box 33 may be thicker than the slat body 31 in the second direction (the negative z-direction in this example), as illustrated in FIG. 18. In other words, for example, the housing 33b in the connection box 33 may have a portion protruding in the second direction (the negative z-direction in this example) from the first back surface 31s of the slat body 31. For example, when no solar cell element 323 overlaps the housing 33b as viewed in plan in the second direction (negative z-direction) and the blind unit 3 is folded, the housing 33b may come in contact with a portion of the solar cell unit 32 located away from the solar cell elements 323 in the longitudinal direction of the solar cell unit 32 between adjacent slats 3s. Thus, for example, when the adjacent slats 3s come in contact with each other upon the blind unit 3 being folded, the solar cell elements 323 are less likely to receive impact, reducing the likelihood of damage such as a crack in the solar cell elements 323. The housing 33b in the connection box 33 may have, for example, the same thickness as the slat body 31 in the second direction (the negative z-direction in this example).

### 1-3. Overview of First Embodiment

In the slat 3s according to the first embodiment, for example, the housing 33b in the connection box 33 is located along the first side surface 31t of the slat body 31, allowing the slat 3s to be thinner. Thus, for example, when the multiple slats 3s in the solar cell blind 1 are drawn in a direction being upward (the positive z-direction in this example), the slats 3s are less likely to be bulky. This can improve, for example, the daylighting function and the open-close function of the solar cell blind 1. In addition, for example, this reduces, during storage and transportation, the space occupation rate of the slats 3s before incorporated in the solar cell blind 1 and facilitates the handling of the slats 3s.

For example, the wires 32w connected to the electrodes in the solar cell unit 32 are connected to the cables 33c with the conductors 33m in the connection boxes 33 that each have a constant positional relationship with the solar cell unit 32. Thus, for example, when the inclination angle of the multiple slats 3s in the solar cell blind 1 with respect to the horizontal plane is changed by the angle adjustor and when the slats 3s are lifted or lowered by the lifting-lowering assembly, the wires 32w extending from the solar cell unit 32 are less likely to deform. The wires 32w are thus, for example, less likely to be damaged, improving the durability of the slats 3s. This can improve, for example, the durability of the solar cell blind 1. In addition, for the multiple slats 3s before incorporated in the solar cell blind 1, for example, the wires 32w extending from the solar cell unit 32 are less likely to deform during transportation. The wires 32w are thus, for example, less likely to be damaged, improving the durability of the slats 3 s.

### 2. Other Embodiments

The present disclosure is not limited to the first embodiment described above and may be changed or varied in various manners without departing from the spirit and scope of the present disclosure.

### 2-1. Second Embodiment

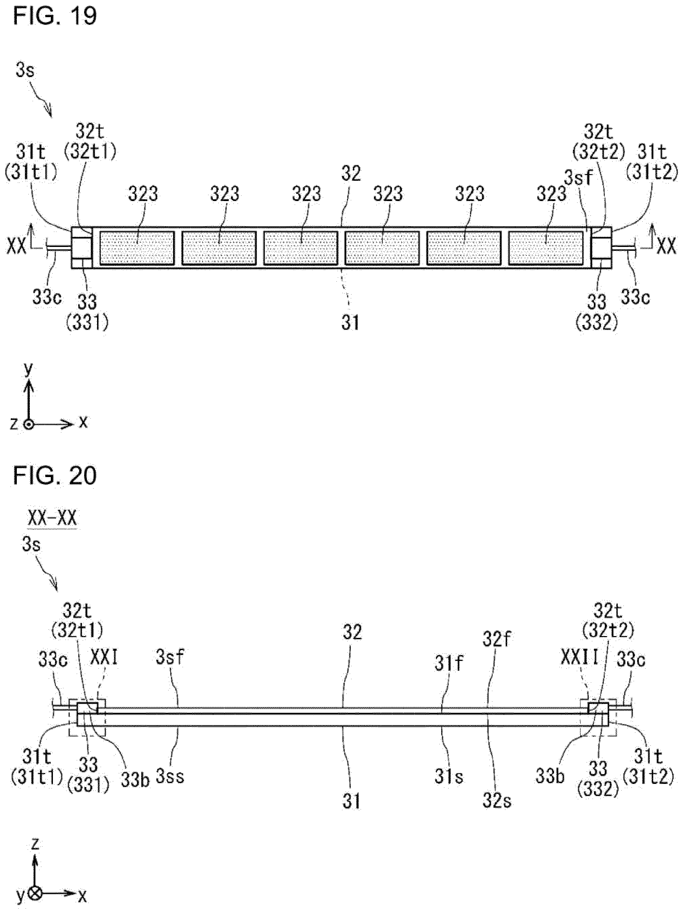

In the above first embodiment, the housing 33b may be located along the side surface (second side surface) 32t of the solar cell unit 32 as illustrated in, for example, FIGs. 19 to 22. This structure can also, for example, reduce the thickness of the slat 3s. Thus, for example, when the multiple slats 3s in the horizontal solar cell blind 1 are drawn in a direction being upward, the slats 3s are less likely to be bulky, improving the daylighting function and the open-close function. In addition, for example, this reduces, during storage and transportation, the space occupation rate of the slats 3s before incorporated in the solar cell blind 1 and facilitates the handling of the slats 3s. For example, the wires 32w, which serve as wires connected to the electrodes in the solar cell unit 32, are connected to the cables 33c with the conductors 33m in the connection boxes 33 that each have a constant positional relationship with the solar cell unit 32. Thus, for example, when the inclination angle of the multiple slats 3s in the solar cell blind 1 with respect to the horizontal plane is changed by the angle adjustor and when the slats 3s are lifted or lowered by the lifting-lowering assembly, the wires 32w extending from the solar cell unit 32 are less likely to deform. The wires 32w are thus, for example, less likely to be damaged, improving the durability of the slats 3s. This can improve, for example, the durability of the solar cell blind 1. In addition, for the multiple slats 3s before incorporated in the solar cell blind 1, for example, the wires 32w extending from the solar cell unit 32 are less likely to deform during transportation. The wires 32w are thus, for example, less likely to be damaged, improving the durability of the slats 3s.

In the second embodiment, for example, the second back surface 32s is located along the first front surface 31f. The second back surface 32s is fixed to the first front surface 31f with, for example, an adhesive or double-sided tape.

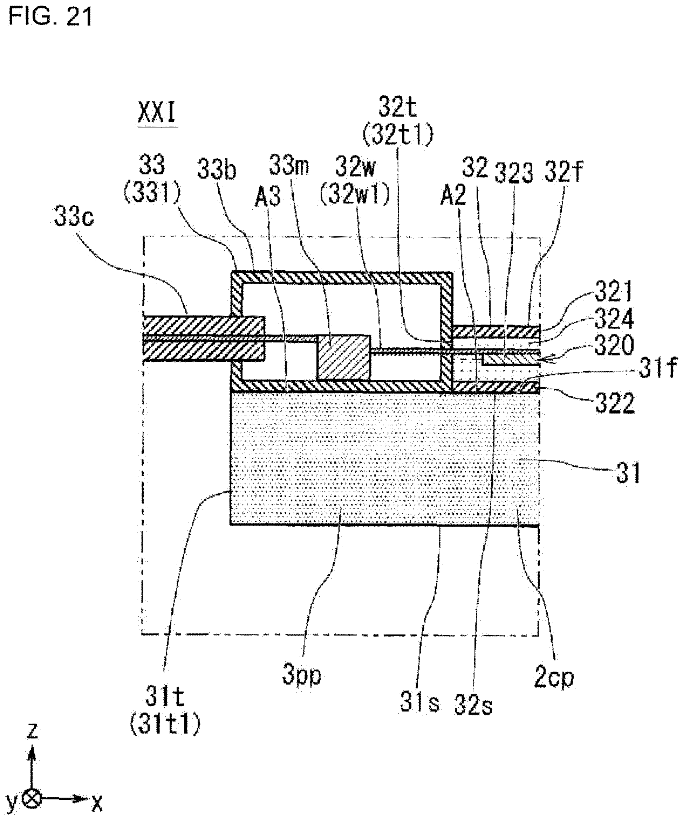

As illustrated in, for example, FIG. 21, the housing 33b in the first connection box 331 is located along the second A-side surface 32t1 at the end of the solar cell unit 32 in the first direction (the negative x-direction in this example). In other words, for example, the second A-side surface 32t1 in the second side surface 32t located along the housing 33b in the first connection box 331 is at the end of the solar cell unit 32 in the first direction (the negative x-direction in this example). This allows, for example, the slat 3s to easily be a simple rectangular strip. This allows, for example, the slat 3s to have a simpler structure. In the example in FIG. 21, the slat body 31 includes a portion (also referred to as a second middle portion) 2cp as a third portion located along the solar cell unit 32 and a portion (also referred to as a third protrusion) 3pp as a fourth portion protruding from the solar cell unit 32 in the first direction (the negative x-direction in this example). The second back surface 32s in the third surface is located along an area (also referred to as a second area) A2 including a surface of the second middle portion 2cp as the third portion of the first front surface 31f in the first surface. The housing 33b is located along an area (also referred to as a third area) A3 including at least a part of a surface of the third protrusion 3pp as the fourth portion of the first front surface 31f in the first surface and along the second side surface 32t (more specifically, the second A-side surface 3211). With the housing 33b in the first connection box 331 along the second side surface 32t of the solar cell unit 32, for example, the slat 3s can be thinner. In this case, the housing 33b is fixed to one or more of the first front surface 31f of the slat body 31 and the second side surface 32t (more specifically, the second A-side surface 32t1) of the solar cell unit 32 with, for example, an adhesive or double-sided tape.

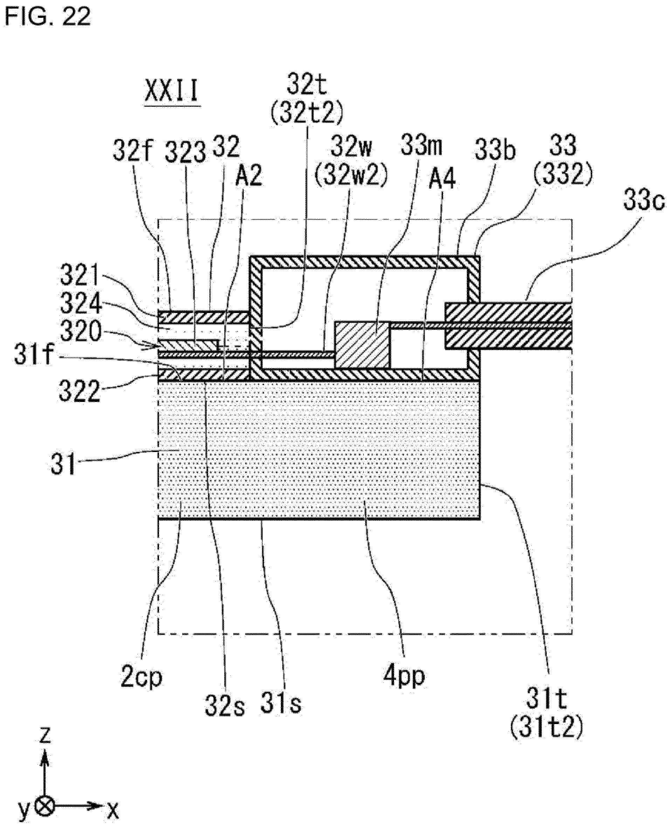

As illustrated in, for example, FIG. 22, the housing 33b in the second connection box 332 is located along the second B-side surface 32t2 at the end of the solar cell unit 32 in the direction (the positive x-direction in this example) opposite to the first direction (the negative x-direction in this example). In other words, for example, the second B-side surface 32t2 in the second side surface 32t located along the housing 33b in the second connection box 332 is at the end of the solar cell unit 32 in the direction (the positive x-direction in this example) opposite to the first direction (the negative x-direction in this example). This allows, for example, the slat 3s to easily be a simple rectangular strip. This allows, for example, the slat 3s to have a simpler structure. In the example in FIG. 22, the slat body 31 includes the portion (the second middle portion) 2cp as the third portion located along the solar cell unit 32, and a portion (also referred to as a fourth protrusion) 4pp protruding from the solar cell unit 32 in the direction (the positive x-direction in this example) opposite to the first direction (the negative x-direction in this example). The housing 33b is located along an area (also referred to as a fourth area) A4 including at least a part of a surface of the fourth protrusion 4pp of the first front surface 31f in the first surface and along the second side surface 32t (more specifically, the second B-side surface 32t2). With the housing 33b in the second connection box 332 along the second side surface 32t of the solar cell unit 32, for example, the slat 3s can be thinner. In this case, the housing 33b is fixed to one or more of the first front surface 31f of the slat body 31 and the second side surface 32t (more specifically, the second B-side surface 32t2) of the solar cell unit 32 with, for example, an adhesive or double-sided tape.

### 2-2. Third Embodiment

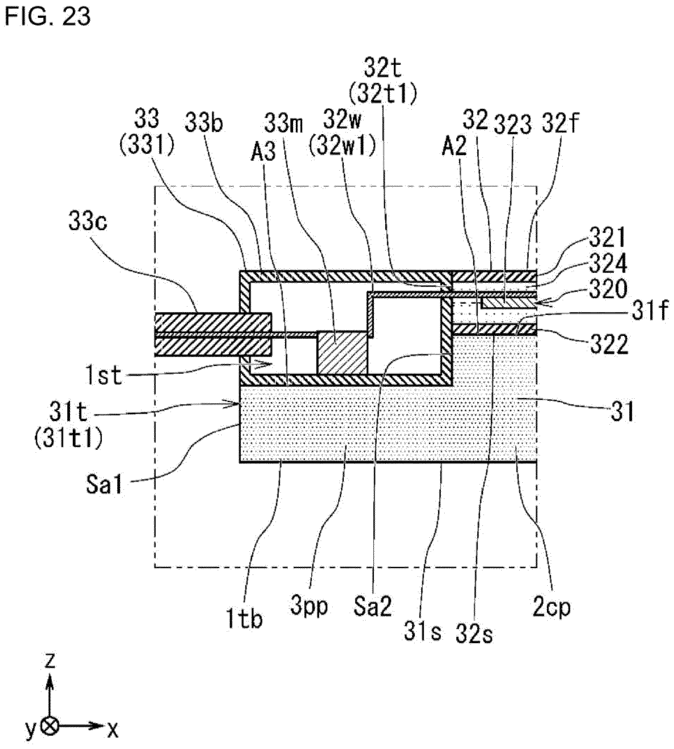

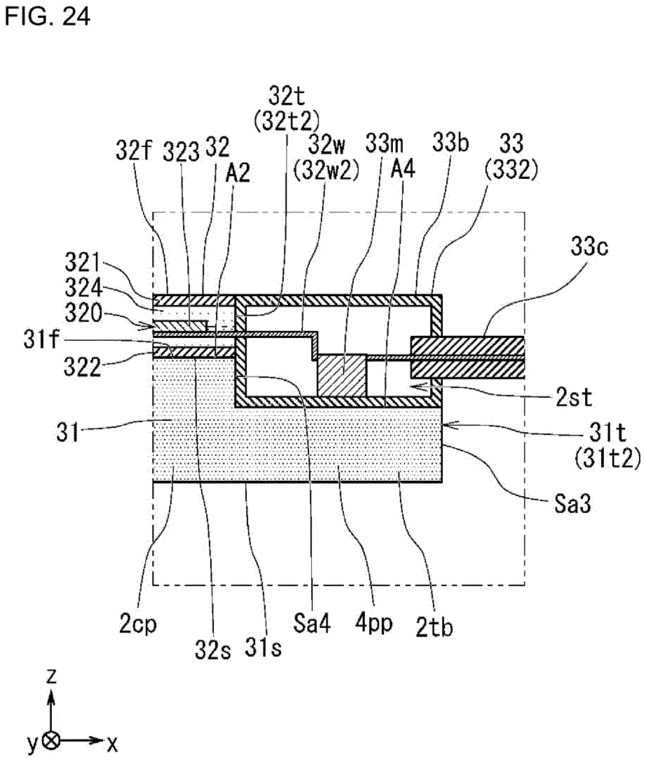

In the above second embodiment, as illustrated in, for example, FIGs. 23 and 24, an area of the first front surface 31f along the housing 33b may be shifted in the second direction (the negative z-direction in this example) perpendicular to the first front surface 31f and more away from the solar cell unit 32 than an area of the first front surface 31f along the second back surface 32s of the solar cell unit 32. Compared with the second embodiment, for example, this structure can, for example, cause the housing 33b in the connection box 33 to reduce or eliminate the portion protruding from the second front surface 32f of the solar cell unit 32 in the direction (the positive z-direction in this example) opposite to the second direction (the negative z-direction in this example). This allows, for example, the slat 3s to be thinner.

As illustrated in, for example, FIG. 23, the third protrusion 3pp as the fourth portion may include a thin plate portion (also referred to as a first thin plate portion) 1tb thinner than the second middle portion 2cp as the third portion in the second direction (the negative z-direction in this example). In this case, for example, the third area A3 includes at least a part of the surface of the third protrusion 3pp as the fourth portion on the first front surface 31f in the first surface is shifted in the second direction (the negative z-direction in this example) with respect to the second area A2 including the surface of the second middle portion 2cp as the third portion. The third area A3 includes, for example, a surface of the first thin plate portion 1tb of the first front surface 31f in the first surface. With this structure, for example, the housing 33b in the first connection box 331 is on the surface of the first thin plate portion 1tb shifted in the second direction (the negative z-direction in this example) and away from the solar cell unit 32 on the first front surface 31f in the first surface of the slat body 31, allowing the slat 3s to be thinner.

In the example in FIG. 23, the entire third protrusion 3pp includes the first thin plate portion 1tb. The second middle portion 2cp and the first thin plate portion 1tb thus form a step (also referred to as a first step) 1st on the first front surface 31f. The first step 1st may be formed by, for example, a method appropriate for the material of the slat body 31, such as cutting or molding. In the first step 1st, for example, a first side surface area Sa1 of the first A-side surface 3111, an area of the first front surface 31f including the surface of the third protrusion 3pp, a second side surface area Sa2 of the first-A side surface 31t1, and an area of the first front surface 31f including the surface of the second middle portion 2cp are connected in this order. The first side surface area Sa1 includes a side surface of the third protrusion 3pp of the first A-side surface 31t1. The second side surface area Sa2 includes a side surface of the second middle portion 2cp of the first A-side surface 31t1. In this case, the housing 33b in the first connection box 331 is located along both the first A-side surface 31t1 (more specifically, the second side surface area Sa2) and the second A-side surface 32t1. The housing 33b in the first connection box 331 is fixed to one or more of the first front surface 31f of the slat body 31, the first side surface 31t (more specifically, the second side surface area Sa2 of the first A-side surface 31t1) of the slat body 31, and the second side surface 32t (more specifically, the second A-side surface 32t1) of the solar cell unit 32 with, for example, an adhesive or double-sided tape.

As illustrated in, for example, FIG. 24, the fourth protrusion 4pp may also include a thin plate portion (also referred to as a second thin plate portion) 2tb thinner than the second middle portion 2cp in the second direction (the negative z-direction in this example). In this case, for example, the fourth area A4 including at least a part of the surface of the fourth protrusion 4pp of the first front surface 31f in the first surface is shifted in the second direction (the negative z-direction in this example) with respect to the second area A2 including the surface of the second middle portion 2cp. The fourth area A4 includes, for example, a surface of the second thin plate portion 2tb of the first front surface 31f in the first surface. With this structure, the housing 33b in the second connection box 332 is on the surface of the second thin plate portion 2tb shifted in the second direction (the negative z-direction in this example) and away from the solar cell unit 32 on the first front surface 31f in the first surface of the slat body 31, allowing the slat 3s to be thinner.

In the example in FIG. 24, the entire fourth protrusion 4pp includes the second thin plate portion 2tb. The second middle portion 2cp and the second thin plate portion 2tb thus form a step (also referred to as a second step) 2st on the first front surface 31f. The second step 2st may be formed by, for example, a method appropriate for the material of the slat body 31, such as cutting or molding. In the second step 2st, for example, a third side surface area Sa3 of the first B-side surface 3 1t2, an area of the first front surface 31f including the surface of the fourth protrusion 4pp, a fourth side surface area Sa4 of the first-B side surface 31t2, and an area of the first front surface 31f including the surface of the second middle portion 2cp are connected in this order. The third side surface area Sa3 includes a side surface of the fourth protrusion 4pp of the first B-side surface 3 1t2. The fourth side surface area Sa4 includes a side surface of the second middle portion 2cp of the first B-side surface 3 112. In this case, the housing 33b in the second connection box 332 is located along both the first B-side surface 31t2 (more specifically, the fourth side surface area Sa4) and the second B-side surface 32t2. In this case, the housing 33b in the second connection box 332 is fixed to one or more of the first front surface 31f of the slat body 31, the first side surface 31t of the slat body 31 (more specifically, the fourth side surface area Sa4 of the first B-side surface 31t2), and the second side surface 32t (more specifically, the second B-side surface 32t2) of the solar cell unit 32 with, for example, an adhesive or double-sided tape.

In the examples described in the above first, second, and third embodiments, for example, the housing 33b is located along one or more of the first side surface 31t and the second side surface 32t, allowing the slat 3s to be thinner.

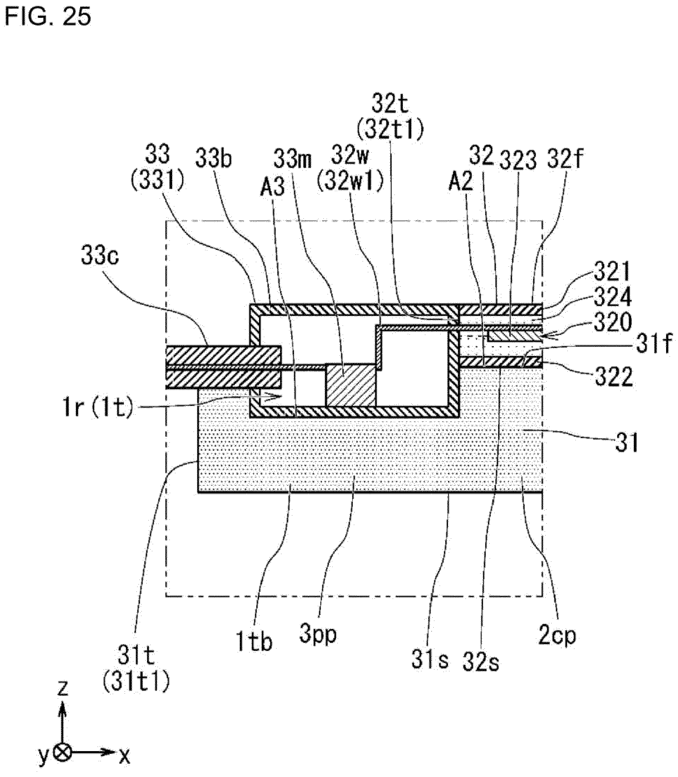

As illustrated in, for example, FIG. 25, the third protrusion 3pp may include the first thin plate portion 11b in a portion with a recess (also referred to as a first recess) 1r or a groove (also referred to as a first groove) 1t on the first front surface 3 1f. In the third protrusion 3pp, for example, the first groove 1t may extend to the end in one or more of the third direction (the negative y-direction in this example) and the fourth direction (the positive y-direction in this example). The third area A3 includes, for example, at least a part of the bottom surface of the first recess 1r or the first groove 1t. For example, the housing 33b in the first connection box 331 includes a portion received in the first recess 1r or in the first groove 1t. This allows, for example, the slat 3s to be thinner. The first recess 1r and the first groove 1t may be formed by, for example, a method appropriate for the material of the slat body 31, such as cutting or molding.

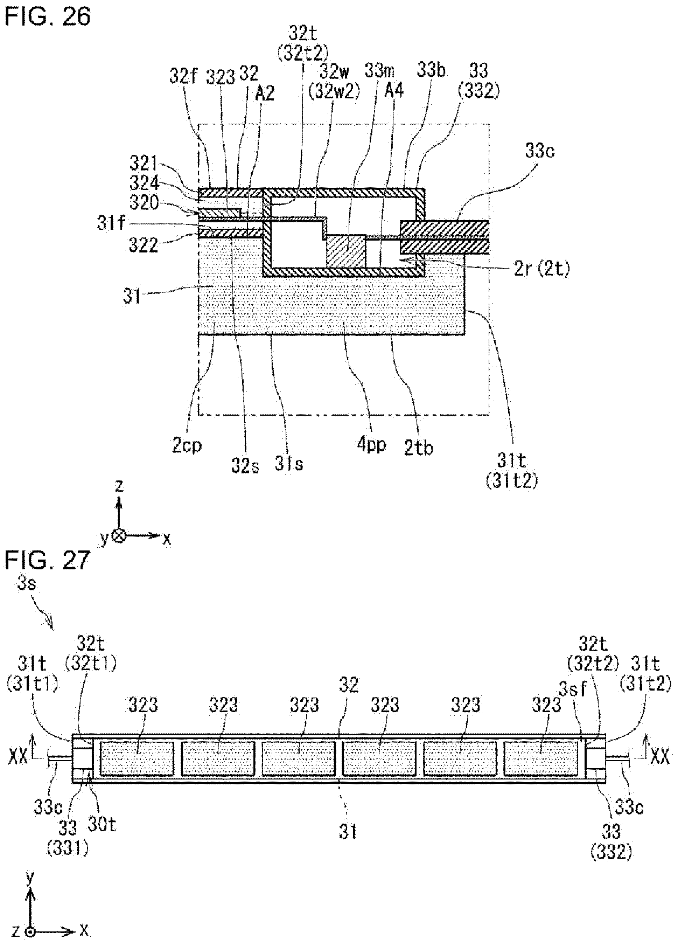

As illustrated in, for example, FIG. 26, the fourth protrusion 4pp may include the second thin plate portion 2tb in a portion with a recess (also referred to as a second recess) 2r or a groove (also referred to as a second groove) 2t on the first front surface 3 1f. In the fourth protrusion 4pp, for example, the second groove 2t may extend to the end in one or more of the third direction (the negative y-direction in this example) and the fourth direction (the positive y-direction in this example). The fourth area A4 includes, for example, at least a portion of the bottom surface of the second recess 2r or the second groove 2t. For example, the housing 33b in the second connection box 332 includes a portion received in the second recess 2r or in the second groove 2t. This allows, for example, the slat 3s to be thinner. The second recess 2r and the second groove 2t may be formed by, for example, a method appropriate for the material of the slat body 31, such as cutting or molding.

### 2-3. Fourth Embodiment

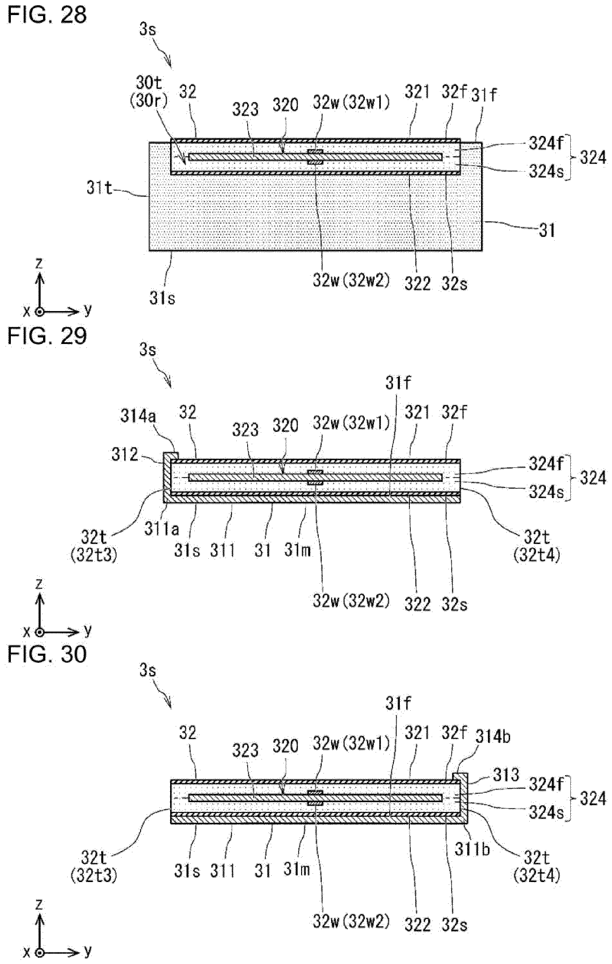

In the above embodiments, as illustrated in, for example, FIGs. 27 and 28, the slat body 31 may include a recess (also referred to as a third recess) 30r or a groove (also referred to as a third groove) 30t receiving the solar cell unit 32 on the first front surface 31f. The third recess 30r and the third groove 30t are portions recessed in the second direction (in the negative z-direction in this example) from the surrounding portions on the first front surface 31f of the slat body 31. In the slat body 31, for example, the third groove 30t extends to the end in the first direction (the negative x-direction in this example) or to the end in the direction opposite to the first direction (the negative x-direction in this example), depending on the position of the connection box 33. In the slat body 31, for example, the third groove 30t may extend to one or more of the end in the third direction (the negative y-direction in this example) and the end in the fourth direction (the positive y-direction in this example), depending on the position of the connection box 33. For example, at least a part of the solar cell unit 32 in the second direction (negative z-direction in this example) received in the third recess 30r or in the third groove 30t allows the slat 3s to be thinner. The third recess 30r and the third groove 30t may be formed by, for example, a method appropriate for the material of the slat body 31, such as cutting or molding.

### 2-4. Fifth Embodiment

In the above embodiments, as illustrated in, for example, FIGs. 29 to 31, the slat body 31 may be a thin plate (also referred to as a thin plate member) 31m bent along the second back surface 32s and at least one of the second side surfaces 32t in the lateral direction of the solar cell unit 32. The thin plate member 31m is a sheet member made of, for example, a metal such as aluminum or a resin. The thin plate member 31m has a thickness of, for example, about 0.1 to 0.5 mm. The thin plate member 31m used for the slat body 31 may be formed by, for example, bending a sheet member made of a metal such as aluminum. The thin plate member 31m used for the slat body 31 may be formed by, for example, molding such as resin molding. With this structure, for example, the slat body 31 can maintain its rigidity and be thinner. This allows, for example, the slat 3s to be thinner.

In the example in FIG. 29, the thin plate member 31m used for the slat body 31 includes a first plate portion 311 and a second plate portion 312. The first plate portion 311 is located along the second back surface 32s in the third surface of the solar cell unit 32. The second plate portion 312 is connected to an end (also referred to as a first end) 311a of the first plate portion 311 in the third direction (the negative y-direction in this example) and located along the side surface (second C-side surface) 32t3 of the solar cell unit 32 in the third direction (the negative y-direction in this example). In this case, the thin plate member 31m may include, for example, a portion (also referred to as a first engagement portion) 314a protruding from the second plate portion 312 along the second front surface 32f of the solar cell unit 32.

In the example in FIG. 30, the thin plate member 31m used for the slat body 31 includes the first plate portion 311 and a third plate portion 313. The first plate portion 311 is located along the second back surface 32s in the third surface of the solar cell unit 32. The third plate portion 313 is connected to an end (also referred to as a second end) 31 1b of the first plate portion 311 in the fourth direction (the positive y-direction in this example) opposite to the third direction (the negative y-direction in this example) and located along the side surface (second D-side surface) 32t4 of the solar cell unit 32 in the fourth direction (the positive y-direction in this example). In this case, the thin plate member 31m may include, for example, a portion (also referred to as a second engagement portion) 314b protruding from the third plate portion 313 along the second front surface 32f of the solar cell unit 32.

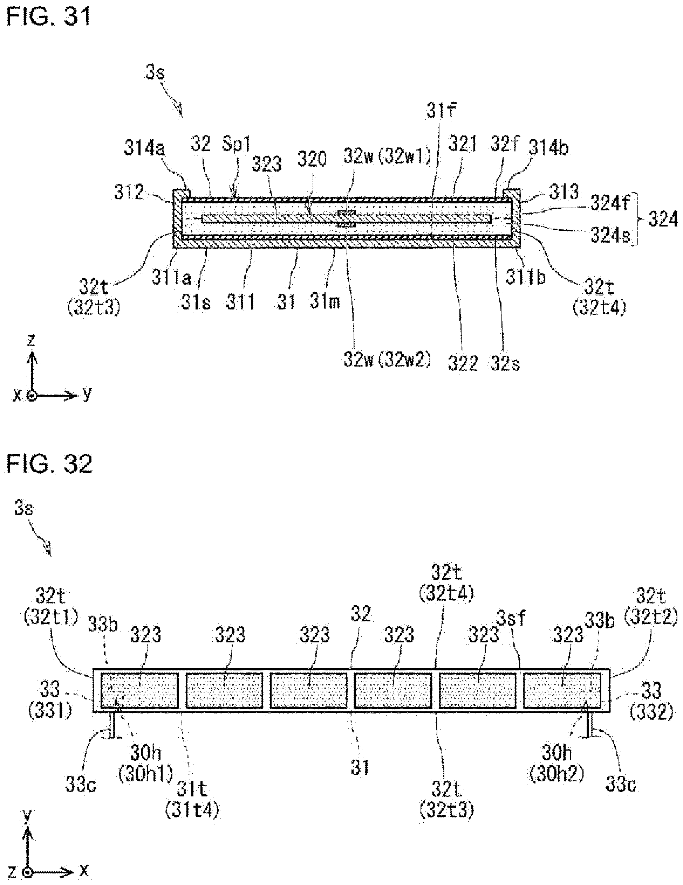

In the example in FIG. 31, the thin plate member 31m used for the slat body 31 includes the first plate portion 311, the second plate portion 312, and the third plate portion 313. The first plate portion 311 is located along the second back surface 32s in the third surface of the solar cell unit 32. The second plate portion 312 is, for example, connected to the first end 311a of the first plate portion 311 in the third direction (the negative y-direction in this example) and located along the side surface (second C-side surface) 32t3 of the solar cell unit 32 in the third direction (the negative y-direction in this example). The third plate portion 313 is connected to the second end 311b of the first plate portion 311 in the fourth direction (the positive y-direction in this example) opposite to the third direction (the negative y-direction in this example) and located along the side surface (second D-side surface) 32t4 of the solar cell unit 32 in the fourth direction (the positive y-direction in this example).

For example, the thin plate member 31m including the first engagement portion 314a and the second engagement portion 314b allows the solar cell unit 32 to be fitted inside the thin plate member 31m. In this case, the solar cell unit 32 can be fixed to the slat body 31 without, for example, bonding with an adhesive or double-sided tape. For example, the solar cell unit 32 may be placed into a space Sp1 inside the thin plate member 31m through an opening in the first direction (the negative x-direction in this example) being the longitudinal direction of the thin plate member 31m, or through an opening in the direction (the positive x-direction in this example) opposite to the first direction (the negative x-direction in this example). The solar cell unit 32 may be fitted inside the thin plate member 31m by, for example, placing the solar cell unit 32 into the space Sp1 inside the thin plate member 31m with at least one of the thin plate member 31m or the solar cell unit 32 being deformed elastically. In this case, the first front surface 31f of the slat body 31 and the second back surface 32s of the solar cell unit 32 may be in close contact with each other without a thin layer (a bonding layer) of an adhesive or double-sided tape in between. In other words, for example, the second back surface 32s of the solar cell unit 32 may be located along the first front surface 31f of the slat body 31, or the first front surface 31f of the slat body 31 may be located along the second back surface 32s of the solar cell unit 32.

In the fifth embodiment, for example, the thin flat member 31m used for the slat body 31 including the first plate portion 311 and at least one of the second plate portion 312 or the third plate portion 313 allows the slat 3s to be thinner. For example, the thin flat member 31m used for the slat body 31 including the first plate portion 311, the second plate portion 312, and the third plate portion 313 allows the slat body 31 to maintain its rigidity and to be still thinner. This allows, for example, the slat 3s to be still thinner.

### 2-5. Sixth Embodiment

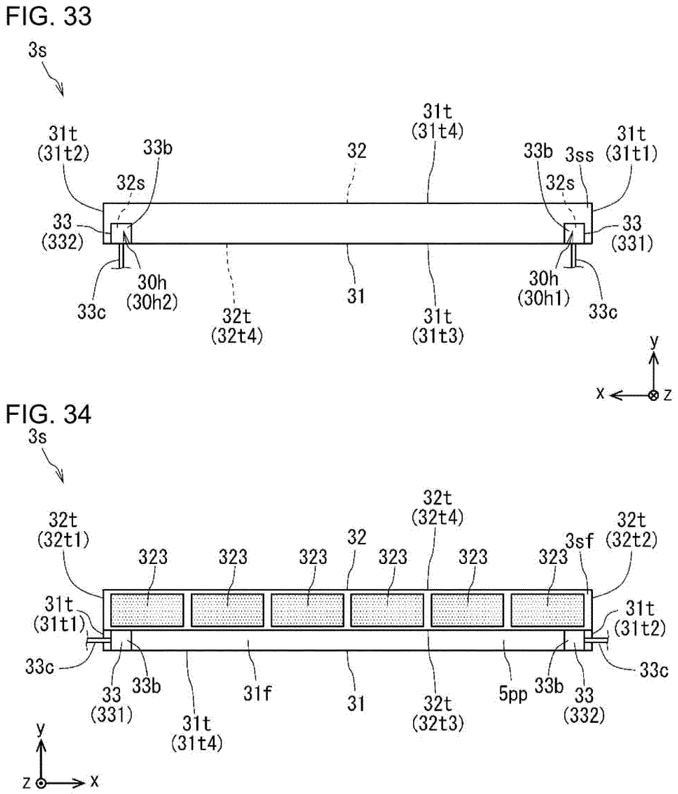

In the above first embodiment, as illustrated in, for example, FIGs. 32 and 33, the housing 33b may be located along the first C-side surface 31t3 in the first side surface 31t located at the end of the slat body 31 in the third direction (the negative y-direction in this example). For example, the housing 33b may be located along the first D-side surface 31t4 in the first side surface 31t located at the end of the slat body 31 in the fourth direction (the positive y-direction in this example). In other words, for example, the first side surface 31t located along the housing 33b may be located at the end of the slat body 31 in the third direction (the negative y-direction in this example) or at the end of the slat body 31 in the fourth direction (the positive y-direction in this example). This structure can also, for example, reduce the thickness of the slat 3s.

In the slat 3s in a first example of the sixth embodiment illustrated in FIGs. 32 and 33, for example, the housing 33b is located along areas (also referred to as recessed areas) 30h recessed in the fourth direction (the positive y-direction in this example) on the first C-side surface 31t3 and along the second back surface 32s of the solar cell unit 32. More specifically, for example, the housing 33b in the first connection box 331 is located along a first recessed area 30h (also referred to as a first recessed area 30h1) in the first C-side surface 3113 near the first A-side surface 31t1 and along the second back surface 32s of the solar cell unit 32. For example, the housing 33b in the second connection box 332 is located along a second recessed area 30h (also referred to as a second recessed area 30h2) in the first C-side surface 31t3 near the first B-side surface 31t2 and along the second back surface 32s of the solar cell unit 32. The first recessed area 30h1 and the second recessed area 30h2 each extend from the first front surface 31f to the first back surface 31s.

In the above second and third embodiments, as illustrated in, for example, FIG. 34, the housing 33b may be located along the second C-side surface 32t3 in the second side surface 32t at the end of the solar cell unit 32 in the third direction (the negative y-direction in this example). For example, the housing 33b may be located along the second D-side surface 32t4 in the second side surface 32t at the end of the solar cell unit 32 in the fourth direction (the positive y-direction in this example). In other words, for example, the second side surface 32t located along the housing 33b is at the end of the solar cell unit 32 in the third direction (the negative y-direction in this example) or at the end of the solar cell unit 32 in the fourth direction (the positive y-direction in this example). This structure can also, for example, reduce the thickness of the slat 3s.

In the slat 3s in a second example of the sixth embodiment illustrated in FIG. 34, for example, the slat body 31 includes a portion (also referred to as the fifth protrusion) 5pp protruding from the solar cell unit 32 in the third direction (the negative y-direction in this example). The housing 33b is located along an area of the first front surface 31f including a surface of the fifth protrusion 5pp and along the second C-side surface 32t3 of the solar cell unit 32. More specifically, for example, the housing 33b in the first connection box 331 is located along an area of the first front surface 31f including the surface of the fifth protrusion 5pp near the first A-side surface 31t1 and along an area of the second C-side surface 32t3 near the first A-side surface 31t1. For example, the housing 33b in the second connection box 332 is located along an area of the first front surface 31f including the surface of the fifth protrusion 5pp near the first B-side surface 31t2 and along an area of the second C-side surface 32t3 near the first B-side surface 31t2.

### 2-6. Seventh Embodiment

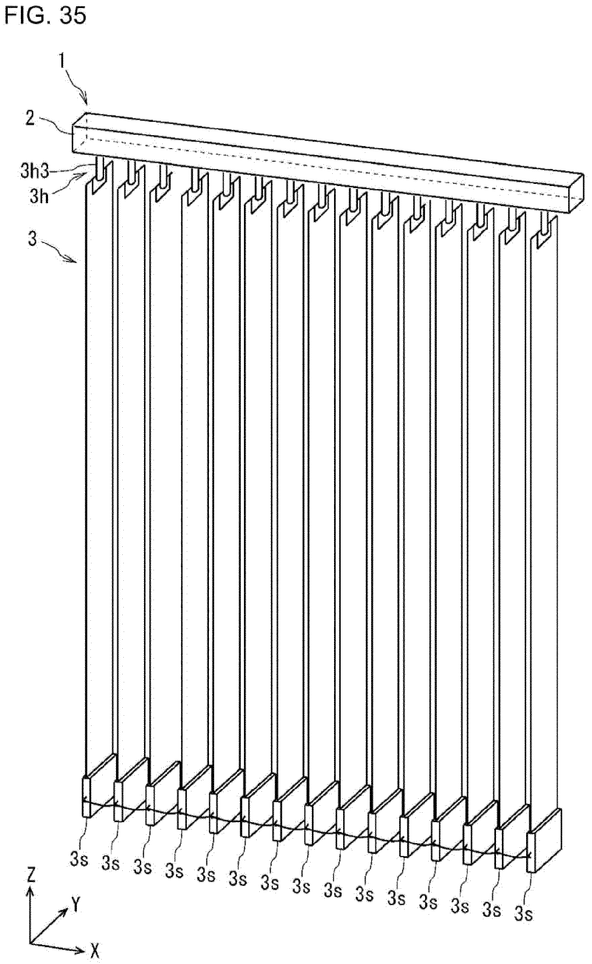

In the above embodiments, the blind unit 3 may be a vertical blind with multiple vertically elongated slats 3s. As illustrated in, for example, FIG. 35, the slats 3s may each have the longitudinal direction being the positive or negative Z-direction as the first direction and may be arranged in the positive X-direction as the fifth direction perpendicular to the first direction. In this case, the first direction is the vertical direction, and the fifth direction is the horizontal direction.

In the example in FIG. 35, each slat 3s is hung from the base 2 with a hanger 3h downward, which is the gravitational direction. Each hanger 3h includes, for example, a holder (also referred to as a rotation holder) 3h3 that holds a slat 3s in a manner rotatable about an imaginary rotation axis (also referred to as a first rotation axis) in the longitudinal direction of the slat 3s. The rotation holder 3h3 may be, for example, a hook used in typical vertical blinds to hang the corresponding slat 3s. The rotation holder 3h3 can pivot about the first rotation axis with, for example, an angle adjustor in the base 2 to cause the slat 3s to pivot about the first rotation axis. This can cause the slat 3s to, for example, be inclined with respect to a vertical plane. The vertical plane is along the XZ plane. Thus, for example, the inclination angle of each slat 3s with respect to the vertical plane can be changed. This allows the blind unit 3 to, for example, block or transmit light.

Multiple rotation holders 3h3 can also move with, for example, a moving assembly in the base 2 in the positive X-direction as the fifth direction and in the negative X-direction as a sixth direction opposite to the fifth direction. Thus, the rotation holders 3h3 moving in either the fifth direction or the sixth direction can move the multiple slats 3s in either the fifth direction or the sixth direction. For example, the slats 3s in the blind unit 3 may be drawn toward the positive X-direction as the fifth direction to be folded, and moved toward the negative X-direction as the sixth direction to be unfolded. For example, the slats 3s in the blind unit 3 may be drawn toward the negative X-direction as the sixth direction to be folded, and moved toward the positive X-direction as the fifth direction to be unfolded.

With this structure as well, for example, each slat 3s with the same or similar structure as the slat 3s described in each of the above embodiments can be thinner. Thus, in the solar cell blind 1, for example, when the multiple slats 3s are drawn in a direction being the horizontal direction, the slats 3s are less likely to be bulky. This can improve, for example, the daylighting function and the open-close function of the solar cell blind 1.

For example, the wires 32w connected to the electrodes in the solar cell unit 32 are connected to the cables 33c with the conductors 33m in the connection boxes 33 that each have a constant positional relationship with the solar cell unit 32. Thus, for example, when the inclination angle of the multiple slats 3s in the solar cell blind 1 with respect to the vertical plane is changed by the angle adjustor and when the slats 3s are lifted or lowered by the lifting-lowering assembly, the wires 32w extending from the solar cell unit 32 are less likely to deform. The wires 32w are thus, for example, less likely to be damaged, improving the durability of the slats 3s. This can improve, for example, the durability of the solar cell blind 1.

### 3. Others

In the above embodiments, for example, the semiconductor substrate in the solar cell element 323 may be a substrate of a crystalline semiconductor different from crystalline silicon, an amorphous semiconductor such as amorphous silicon, a compound semiconductor such as a compound of four elements, copper (Cu), indium (In), gallium (Ga), and selenium (Se), or a semiconductor of a compound of two elements, cadmium (Ca) and tellurium (Te). Each of the multiple solar cell elements 323 may be, for example, a thin film solar cell element including a thin film semiconductor and transparent electrodes. Examples of the thin film semiconductor include a silicon-based thin film, a semiconductor compound-based thin film, and thin films of other semiconductors. The silicon-based thin film may be, for example, a thin film of amorphous silicon or a thin film of polycrystalline silicon. The semiconductor compound-based thin film may be, for example, a thin film of a semiconductor compound with a chalcopyrite structure such as CIS or CIGS, a thin film of a semiconductor compound such as a compound with a perovskite structure, a thin film of a semiconductor compound with a kesterite structure, or a thin film of a semiconductor with cadmium telluride (CdTe). CIS is a semiconductor compound containing Cu, In, and Se. CIGS is a semiconductor compound containing Cu, In, Ga, and Se.

In the above embodiments, the solar cell unit 32 may not include, for example, the second protective layer 322. In this case, for example, the slat body 31 may be made of an insulating material to reduce the likelihood of short-circuiting between the electrodes in the solar cell elements 323 and the slat body 31.

In the above embodiments, for example, the first connection box 331 may include the first wire 32w1 connected to a first cable 33c with a first conductor 33m and the second wire 32w2 connected to a second cable 33c with a second conductor 33m. This may eliminate the second connection box 332. In this case, for example, the multiple slats 3s in the solar cell blind 1 each have the first direction (negative x-direction in this example) being the negative X-direction, and the first cable 33c and the second cable 33c are connected to each other between adjacent slats 3s. The first connection box 331 may include, for example, a connection terminal connectable to, in place of the second cable 33c, the first cable 33c in the first connection box 331 in another slat 3s.

In the above embodiments, for example, the second connection box 332 may include, in place of the cable 33c, a connection terminal connectable to the cable 33c in the first connection box 331. For example, the first connection box 331 may include, in place of the cable 33c, a connection terminal connectable to the cable 33c in the second connection box 332.

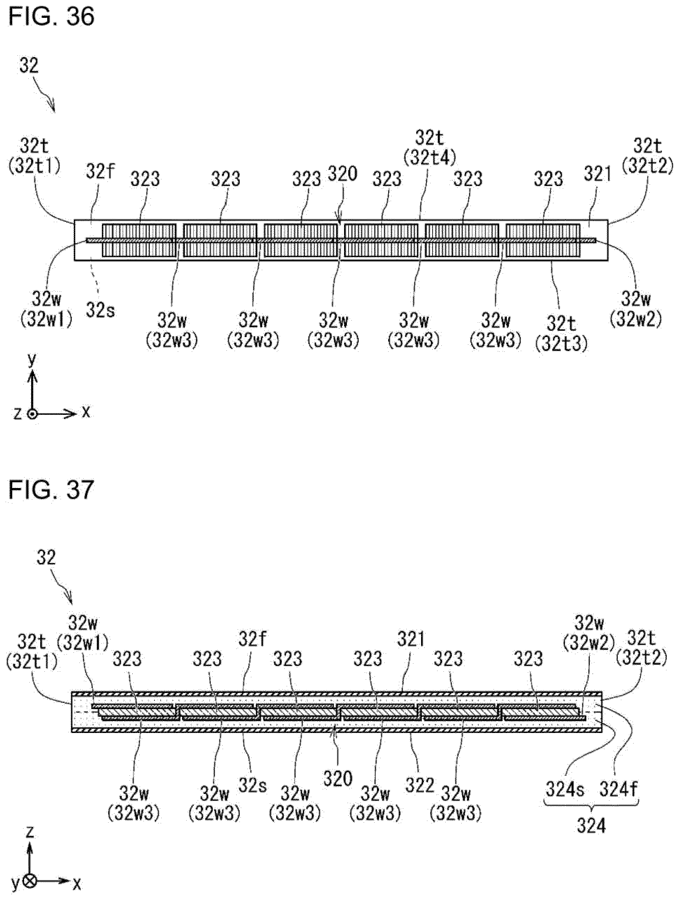

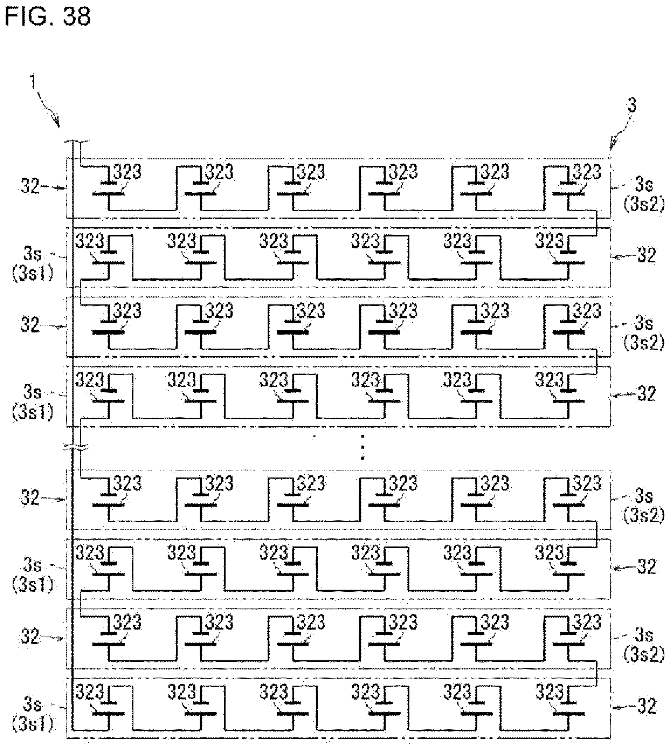

In the above embodiments, as illustrated in, for example, FIGs. 36 and 37, the multiple solar cell elements 323 in the solar cell unit 32 may be connected in series. The multiple wires 32w include, for example, a first wire 32w1, a second wire 32w2, and a third wire 32w3. For example, two adjacent solar cell elements 323 include a first solar cell element 323 and a second solar cell element 323. In this case, the third wire 32w3 connects, for example, the back output electrode in the first solar cell element 323 and the front output electrode in the second solar cell element 323. The third wire 32w3 may be, for example, bonded to each of the front output electrode and the back output electrode with an alloy with a low melting point, such as solder, or a single metal with a low melting point. The first wire 32w1 is connected to, for example, the front output electrode in the solar cell element 323 located at the end in the first direction (the negative x-direction in this example) among the solar cell elements 323 in the solar cell 320. The first wire 32w1 may be bonded to the front output electrodes with, for example, an alloy with a low melting point, such as solder, or a single metal with a low melting point. The first wire 32w1 has one end extending outside the solar cell unit 32 through, for example, a through-hole in the second protective layer 322 or one second side surface 32t. The second wire 32w2 is connected to, for example, the back output electrode in the solar cell element 323 located at the end in the direction (the positive x-direction in this example) opposite to the first direction (the negative x-direction in this example) among the solar cell elements 323 in the solar cell 320. The second wire 32w2 may be bonded to the back output electrodes with, for example, an alloy with a low melting point, such as solder, or a single metal with a low melting point. The second wire 32w2 has one end extending outside the solar cell unit 32 through, for example, a through-hole in the second protective layer 322 or one second side surface 32t. With this structure, for example, in step S1 of FIG. 14, for example, the multiple solar cell elements 323 are electrically connected by connecting, between adjacent solar cell elements 323, the back output electrode in the first solar cell element 323 and the front output electrode in the second solar cell element 323 with the third wire 32w3. For example, the first wire 32w1 is bonded to the front output electrode in the solar cell element 323 located at the end in the first direction (the negative x-direction in this example) among the solar cell elements 323, and the second wire 32w2 is bonded to the back output electrode in the solar cell element 323 located at the end in the direction (the positive x-direction in this example) opposite to the first direction (the negative x-direction in this example) among the solar cell elements 323. The solar cell 320 with the multiple solar cell elements 323 electrically connected to one another in series can thus be prepared. In the solar cell blind 1, as illustrated in, for example, FIG. 38, the solar cell units 32 may be electrically connected in series between adjacent slats 3s. For example, for two adjacent slats 3s including the first slat 3s1 and the second slat 3s2, the first slat 3s1 may be located with its first direction (the negative x-direction in this example) being the negative X-direction, and the second slat 3s2 may be located with its first direction (the negative x-direction in this example) being the positive X-direction. For example, the cable 33c in the first connection box 331 in the first slat 3s1 and the cable 33c in the second connection box 332 in the second slat 3s2 may be connected to each other between the first slat 3s1 and the second slat 3s2 that are adjacent to each other.

In the above embodiments, for example, the solar cell units 32 in adjacent slats 3s in the solar cell blind 1 may be connected to each other with a bypass diode. The bypass diode may be, for example, in the solar cell unit 32, in the connection box 33, or at the slat body 31.

In the above embodiments, for example, the front surface 3sf of the slat 3s may be a curved surface (also referred to as a protruding curved surface) with its yz cross section perpendicular to the first direction (the negative x-direction in this example) slightly protruding in the direction (the positive z-direction in this example) perpendicular to the first direction (the negative x-direction in this example). For example, the back surface 3ss of the slat 3s may be a curved surface (also referred to as a recessed curved surface) with its yz cross section perpendicular to the first direction (the negative x-direction in this example) slightly recessed in the direction (the positive z-direction in this example) perpendicular to the first direction (the negative x-direction in this example). In other words, the slat 3s may have, for example, a shape that is slightly curved toward the positive z-direction, rather than extending along the xy plane. In this case, for example, the first front surface 31f of the slat body 31 may be a curved surface (also referred to as a protruding curved surface) with its yz cross section perpendicular to the first direction (the negative x-direction in this example) slightly protruding in the direction (the positive z-direction in this example) perpendicular to the first direction (the negative x-direction in this example). For example, the first back surface 31s of the slat body 31 may be a curved surface (also referred to as a recessed curved surface) with its yz cross section perpendicular to the first direction (the negative x-direction in this example) slightly recessed in the direction (the positive z-direction in this example) perpendicular to the first direction (the negative x-direction in this example). Also, for example, the second front surface 32f of the solar cell unit 32 may be a curved surface (also referred to as a protruding curved surface) with its yz cross section perpendicular to the first direction (the negative x-direction in this example) slightly protruding in the direction (the positive z-direction in this example) perpendicular to the first direction (the negative x-direction in this example). For example, the second back surface 32s of the solar cell unit 32 may be a curved surface (also referred to as a recessed curved surface) with its yz cross section perpendicular to the first direction (the negative x-direction in this example) slightly recessed in the direction (the positive z-direction in this example) perpendicular to the first direction (the negative x-direction in this example).

The components described in the above embodiments and variations may be entirely or partially combined as appropriate unless any contradiction arises.

Sustainable Development Goals (SDGs) were adopted as the 17 international goals in United Nations Summit in September 2015. The slat 3s and the solar cell blind 1 according to the embodiments and their variations can contribute to achieving the goals, among the 17 SDGs, for example, 7. Affordable and clean energy, 9. Industry, innovation, and infrastructure, and 11. Sustainable cities and communities.

### REFERENCE SIGNS

1 solar cell blind
1cp first middle portion
1pp first protrusion
1st first step
1tb first thin plate portion
2cp second middle portion
2pp second protrusion
2st second step
2tb second thin plate portion
30r third recess
30t third groove
31 slat body
311 first plate portion
311a first end
311b second end
312 second plate portion
313 third plate portion
31f first front surface
31m thin plate member
31s first back surface
31t first side surface
31t1 first A-side surface
31t2 first B-side surface
31t3 first C-side surface
31t4 first D-side surface
32 solar cell unit
323 solar cell element
32f second front surface
32s second back surface
32t second side surface
32t1 second A-side surface
32t2 second B-side surface
32t3 second C-side surface
32t4 second D-side surface
32wwire
3 2w 1 first wire
32w2 second wire
33 connection box
331 first connection box
332 second connection box
33b housing
33c cable
33m conductor
3pp third protrusion
3s slat
4pp fourth protrusion
5pp fifth protrusion
A1 first area
A2 second area
A3 third area
A4 fourth area

## Claims

1. A slat for a solar cell, the slat comprising:
a plate-like slat body including a first surface, a second surface opposite to the first surface, and a first side surface;
a plate-like solar cell unit fixed to the plate-like slat body; and
a connection box including a conductor, a housing, and a cable,
the plate-like slat body having a longitudinal direction being a first direction along the first surface,
the plate-like solar cell unit including a third surface on the first surface, a fourth surface opposite to the third surface, and a second side surface connecting the third surface and the fourth surface, the plate-like solar cell unit having a longitudinal direction being the first direction,
the conductor being connected to a wire connected to an electrode in the plate-like solar cell unit,
the housing accommodating the conductor and being along at least one of the first side surface or the second side surface,
the cable being electrically connected to the conductor and protruding from inside the housing to outside the housing.

2. The slat according to claim 1, wherein
the first side surface is at an end of the plate-like slat body in the first direction, and
the second side surface is at an end of the plate-like solar cell unit in the first direction.

3. The slat according to claim 2, wherein
the plate-like solar cell unit includes a first portion along the plate-like slat body and a second portion protruding from the plate-like slat body in the first direction, and
the housing is along a first area including a surface of the second portion in the third surface and along the first side surface.

4. The slat according to claim 2, wherein
the plate-like slat body includes a third portion along the plate-like solar cell unit and a fourth portion protruding from the plate-like solar cell unit in the first direction,
the third surface is along a second area including a surface of the third portion in the first surface, and
the housing is along a third area including at least a part of a surface of the fourth portion in the first surface and along the second side surface.

5. The slat according to claim 4, wherein
the fourth portion includes a thin plate portion thinner than the third portion in a second direction perpendicular to the first surface and being away from the plate-like solar cell unit, and
the third area is shifted in the second direction with respect to the second area and includes a surface of the thin plate portion in the first surface.

6. The slat according to any one of claims 1 to 5, wherein
the plate-like slat body includes a recess or a groove receiving the plate-like solar cell unit on the first surface.

7. The slat according to any one of claims 1 to 5, wherein
the plate-like slat body has a lateral direction being a third direction along the first surface and orthogonal to the first direction,
the plate-like solar cell unit has a lateral direction being the third direction,
the plate-like slat body includes a thin plate member,
the thin plate member includes a first plate portion and at least one of a second plate portion or a third plate portion,
the first plate portion is along the third surface,
the second plate portion is connected to an end of the first plate portion in the third direction and is along a side surface of the plate-like solar cell unit in the third direction, and
the third plate portion is connected to an end of the first plate portion in a fourth direction opposite to the third direction and is along a side surface of the plate-like solar cell unit in the fourth direction.

8. The slat according to claim 7, wherein
the thin plate member includes the second plate portion and the third plate portion.

9. The slat according to claim 1, wherein
the plate-like slat body has a lateral direction being a third direction along the first surface and orthogonal to the first direction,
the plate-like solar cell unit has a lateral direction being the third direction,
the first side surface is at an end of the plate-like slat body in the third direction or at an end of the plate-like slat body in a fourth direction opposite to the third direction, and
the second side surface is at an end of the plate-like solar cell unit in the third direction or at an end of the plate-like solar in the fourth direction.

10. A solar cell blind, comprising:
a plurality of the slats according to any one of claims 1 to 9, the plurality of slats being arranged in a fifth direction perpendicular to the first direction.
